(19) Europäisches Patentamt
European Patent Office
Office européen des brevets

(11) EP 3 733 725 B1

(12) **EUROPEAN PATENT SPECIFICATION**

(45) Date of publication and mention of the grant of the patent:
**12.06.2024 Bulletin 2024/24**

(21) Application number: **18896258.3**

(22) Date of filing: **17.12.2018**

(51) International Patent Classification (IPC):
***C08F 210/00*** *(2006.01)* ***C08F 4/70*** *(2006.01)*
***C08F 220/00*** *(2006.01)* ***C08F 220/04*** *(2006.01)*
***C08F 232/00*** *(2006.01)* ***C08F 8/12*** *(2006.01)*
***C08F 8/44*** *(2006.01)*

(52) Cooperative Patent Classification (CPC):
(C-Sets available)
**C08F 8/44; C08F 8/12;** C08F 210/02; C08F 220/06; C08F 220/1804; C08F 232/08; C08F 2810/50

(Cont.)

(86) International application number:
**PCT/JP2018/046418**

(87) International publication number:
**WO 2019/131291 (04.07.2019 Gazette 2019/27)**

(54) **MULTI-COMPONENT, POLAR-GROUP-CONTAINING OLEFIN COPOLYMER**

MEHRKOMPONENTIGES, POLARE GRUPPEN ENTHALTENDES OLEFIN-COPOLYMER

COPOLYMÈRE D'OLÉFINE À PLUSIEURS COMPOSANTS, CONTENANT DES GROUPES POLAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2017 JP 2017248314**

(43) Date of publication of application:
**04.11.2020 Bulletin 2020/45**

(73) Proprietors:
- **Japan Polyethylene Corporation**
  **Tokyo 100-8251 (JP)**
- **Japan Polypropylene Corporation**
  **Tokyo 100-8251 (JP)**

(72) Inventors:
- **SATOU, Tomohiko**
  **Yokkaichi-shi, Mie 510-0848 (JP)**
- **KOBAYASHI, Minoru**
  **Yokkaichi-shi, Mie 510-0848 (JP)**
- **UEMATSU, Masahiro**
  **Kawasaki-shi, Kanagawa 210-8548 (JP)**
- **YAMADA, Yoshika**
  **Yokkaichi-shi, Mie 510-0848 (JP)**

(74) Representative: **Müller-Boré & Partner Patentanwälte PartG mbB**
**Friedenheimer Brücke 21**
**80639 München (DE)**

(56) References cited:
**EP-A1- 3 208 285**
**JP-A- 2007 077 395**
**JP-A- 2009 530 438**
**JP-A- 2009 535 444**
**JP-A- 2011 504 959**
**JP-A- 2013 227 529**
**JP-A- 2015 028 164**
**KR-A- 20070 100 661**
**US-A1- 2003 144 441**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/12, C08F 8/44, C08F 210/02;**
**C08F 210/02, C08F 4/7098;**
C08F 210/02, C08F 220/06, C08F 232/08, C08F 2500/03, C08F 2500/12, C08F 2500/20, C08F 2500/25, C08F 2500/34, C08F 2500/35, C08F 2500/39;
C08F 210/02, C08F 220/1804, C08F 232/08, C08F 2500/03, C08F 2500/12, C08F 2500/20, C08F 2500/25, C08F 2500/34, C08F 2500/35, C08F 2500/39

**Description**

Technical Field

The present invention relates to a multi-component, polar group-containing olefin copolymer.

Background Art

An ethylene-based ionomer is a resin which contains an ethylene-unsaturated carboxylic acid copolymer as a base resin and in which intermolecular bonding is formed by a metal ion such as sodium and zinc. It is characterized by toughness, high elasticity, high flexibility, abrasion resistance, transparency and so on (Patent Literature 1). Commercially-available ethylene-based ionomer products are known to include "SURLYN (trade name)" (sodium and zinc salt produced by ethylene-(meth)acrylic acid copolymerization, developed by DuPont) and "HIMILAN (trade name)" (available from DuPont-Mitsui Polychemicals Co., Ltd.)

As the ethylene-unsaturated carboxylic acid copolymer used in the conventionally-known ethylene-based ionomer, in particular, a polar group-containing olefin copolymer produced by polymerizing polar group-containing monomers such as ethylene and (meth)acrylic acid by high-pressure radical polymerization method, is used. However, for the polar group-containing olefin copolymer produced by high-pressure radical polymerization method, the molecular structure is a structure in which many long- and short-chain branches are irregularly contained, and the structure has a problem of poor strength.

There is a report of another method for producing the polar group-containing olefin copolymer serving as the base resin of the ethylene-based ionomer, in which a copolymer of ethylene and t-butyl acrylate is produced by use of a late transition metal catalyst; the thus-obtained polar group-containing olefin copolymer is modified into an ethylene-acrylic acid copolymer by heating or acid treatment; and then the ethylene-acrylic acid copolymer is reacted with a metal ion to produce the ethylene-based ionomer (Patent Literature 2).

Since the polar group-containing olefin copolymer produced by use of the transition metal catalyst is used as the base resin, the obtained ionomer is superior in thermal properties, mechanical strength, etc. However, the ionomer has a problem of low transparency since the crystallinity of the ionomer is high.

For the ethylene-based ionomer described in "Examples" of Patent Literature 2, in which the ethylene-acrylic acid copolymer was used as the base resin, its transparency can be controlled by its crystallinity. However, since the ionomer has a trade-off relationship between crystallinity and rigidity, once the crystallinity is reduced to increase the transparency, the rigidity is reduced and results in difficulties in balancing the transparency, rigidity and toughness of the ethylene-based ionomer.

There is a report of a method for producing an ionomer with high rigidity, in which maleic anhydride is introduced into an ethylene-cyclic olefin copolymer (COC) by graft modification, and then the copolymer is reacted with a metal ion to produce an ethylene-based ionomer (Patent Literature 3).

However, the ionomer production method has the following problem: since it is quite difficult to produce a copolymer containing large amounts of maleic anhydride by graft modification, the acid content of the copolymer is small. In fact, the maleic anhydride content of the copolymer described in "Examples" of Patent Literature 3 is only 0.7 wt % to 1.4 wt % (0.5 mol % to 1 mol %). Accordingly, the ethylene-based ionomer containing the graft-modified copolymer as the base resin, is poor in adhesion since the number of polar moieties in the copolymer is small.

Also, the ethylene-based ionomer is thought to fail to exert its expected toughness and elasticity, since the number of reaction points with a metal ion is small.

Also, the ethylene-based ionomer used in "Examples" of Patent Literature 3 has a problem of high glass transition temperature (Tg) and excess hardness, since the content of the cyclic olefin in the base resin is from 21 mol % to 35 mol % and large.

Citation List

Patent Literatures

Patent Literature 1: U.S. Patent No. 3264272
Patent Literature 2: Japanese Patent Application Laid-Open (JP-A) No. 2016-79408
Patent Literature 3: International Publication No. WO2009/123138
Further, Patent Literature 4 (JP-A-2015 028164) describes a multinary polar group-containing copolymer and laminates comprising the same, and

Patent Literature 5 (EP-A-3 208 285) describes a production method of an ethylene and/or alpha-olefin-based ionomer.

## Summary of Invention

### Technical Problem

In light of the above circumstances in the prior art, an object of the present application is to provide a multi-component, polar group-containing olefin copolymer well-balanced between transparency, rigidity and toughness.

### Solution to Problem

The solution to the problem is set out in the appended set of claims.

### Advantageous Effects of Invention

The multi-component, polar group-containing olefin copolymer of the present invention, which contains the non-polar cyclic olefin of the general formula (2) as the third component, is well-balanced between transparency, rigidity and toughness compared to bipolymers such as an ethylene-acrylic acid copolymer.

## Brief Description of Drawings

In the accompanying drawings,

FIG. 1 is a view showing a relationship between the neutralization degree and crystallinity of the base resins or ionomers of Examples 4 to 15 and Comparative Examples 6 to 12, and
FIG. 2 is a view showing a relationship (balance) between the tensile modulus (rigidity) and tensile impact strength (toughness) of the base resins or ionomers of Examples 4 to 15 and Comparative Examples 6 to 12.

## Description of Embodiments

The multi-component, polar group-containing olefin copolymer of the present invention is a multi-component, polar group-containing olefin copolymer comprising:

at least one structural unit (A) selected from the group consisting of a structural unit derived from ethylene and a structural unit derived from an α-olefin which contains 3 to 20 carbon atoms,
a structural unit (B) derived from a polar group-containing olefin monomer represented by the general formula (1), and
a structural unit (C) derived from a non-polar cyclic olefin represented by the general formula (2).

Hereinafter, the multi-component, polar group-containing olefin copolymer of the present invention and applications thereof are explained in detail. In the present Description, the wording "(meth)acrylate" denotes the word "acrylate" or "methacrylate". Also in the present Description, "to" which shows a numerical range is used to describe a range in which the numerical values described before and after "to" indicate the lower limit value and the upper limit value. Also, in the present Description, the multi-component, polar group-containing olefin copolymer means a terpolymer or multi-component copolymer containing at least one structural unit (A), at least one structural unit (B) and at least one structural unit (C).

### (1) Structural unit (A)

The structural unit (A) is at least one structural unit selected from the group consisting of a structural unit derived from ethylene and a structural unit derived from an α-olefin which contains 3 to 20 carbon atoms.
The α-olefin of the present invention is a α-olefin which contains 3 to 20 carbon atoms and represented by the following structural formula: $CH_2 = CHR^{18}$ (where $R^{18}$ is a hydrocarbon group containing 1 to 18 carbon atoms and optionally has a straight- or branched-chain structure). The α-olefin more preferably contains 3 to 12 carbon atoms.
As the structural unit (A), examples include, but are not limited to, ethylene, propylene, 1-butene, 1-pentene, 1-hexene, 1-octene, 1-decene, 3-methyl-1-butene and 4-methyl-1-pentene. The structural unit (A) may be ethylene.
As the structural unit (A), such structural units may be used solely or in combination of two or more kinds.
As the combination of two kinds of such structural units, examples include, but are not limited to, ethylene-propylene, ethylene-1-butene, ethylene-1-hexene, ethylene-1-octene, propylene-1-butene, propylene-1-hexene and propylene-1-octene.

As the combination of three kinds of such structural units, examples include, but are not limited to, ethylene-propylene-1-butene, ethylene-propylene-1-hexene, ethylene-propylene-1-octene, propylene-1-butene-hexene and propylene-1-butene-1-octene.

In the present invention, the structural unit (A) preferably contains ethylene as an essential component. As needed, the structural unit (A) may further contain one or more kinds of α-olefins each of which contains 3 to 20 carbon atoms.

The ethylene in the structural unit (A) may be from 65 mol % to 100 mol %, or may be from 70 mol % to 100 mol %, for the total mol of the structural unit (A).

(2) Structural unit (B)

The structural unit (B) is a structural unit derived from a polar group-containing olefin monomer represented by the following general formula (1):

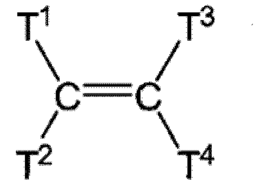

General Formula (1)

where $T^1$ to $T^3$ are each independently a substituent selected from the group consisting of a hydrogen atom, a hydrocarbon group which contains 1 to 20 carbon atoms, a silyl group which contains a carbon skeleton having 1 to 18 carbon atoms, an alkoxy group which contains 1 to 20 carbon atoms, a halogen atom and a cyano group;
$T^4$ is a substituent selected from the group consisting of:

an ester group which contains 2 to 30 carbon atoms ($-COOR^{40}$), a carboxyl group (-COOH), a carboxylic acid salt group (-COOM where M is a monovalent or divalent metal ion of a group selected from the group consisting of Groups 1, 2 and 12 of the periodic table),
an alkoxycarbonyl group ($-COOR^{41}$) which contains 2 to 30 carbon atoms and in which part of a carbon skeleton is substituted with at least one substituent selected from the group consisting of an ester group, a carboxyl group and a carboxylic acid salt group,
a hydrocarbon group ($R^{42}$-) which contains 2 to 20 carbon atoms and in which part of a carbon skeleton is substituted with at least one substituent selected from the group consisting of an ester group, a carboxyl group and a carboxylic acid salt group,
an alkoxy group ($R^{43}O$-) which contains 1 to 20 carbon atoms and in which part of a carbon skeleton is substituted with at least one substituent selected from the group consisting of an ester group, a carboxyl group and a carboxylic acid salt group,
an acyloxy group ($R^{44}COO$-) which contains 2 to 20 carbon atoms and in which part of a carbon skeleton is substituted with at least one substituent selected from the group consisting of an ester group, a carboxyl group and a carboxylic acid salt group,
a substituted amino group ($(R^{45})_2N$- where two $R^{45}$s are each independently optionally a functional group containing 1 to 6 carbon atoms; the functional groups optionally have the same carbon skeleton or different carbon skeletons; and any one of them is optionally a hydrogen atom) which contains 1 to 12 carbon atoms and in which part of a carbon skeleton is substituted with at least one substituent selected from the group consisting of an ester group, a carboxyl group and a carboxylic acid salt group, and
a substituted silyl group ($(R^{46})_3Si$- where three $R^{46}$s are each independently optionally a functional group containing 1 to 6 carbon atoms, and the functional groups optionally have the same carbon skeleton or different carbon skeletons) which contains 1 to 18 carbon atoms and in which part of a carbon skeleton is substituted with at least one substituent selected from the group consisting of an ester group, a carboxyl group and a carboxylic acid salt group;
the carboxylic acid salt group is a carboxylic acid salt group which contains a metal ion of Group 1, 2 or 12 of the periodic table; and
$T^1$, $T^2$, $T^3$ and $T^4$ are optionally bound to form a ring.

In the multi-component, polar group-containing olefin copolymer of the present invention, $T^4$ may be a substituent selected from the group consisting of:

an ester group which contains 2 to 30 carbon atoms, a carboxyl group, a carboxylic acid salt group,
an alkoxycarbonyl group which contains 2 to 30 carbon atoms and in which part of a carbon skeleton is substituted with at least one substituent selected from the group consisting of an ester group, a carboxyl group and a carboxylic acid salt group, and
a hydrocarbon group which contains 2 to 20 carbon atoms and in which part of a carbon skeleton is substituted with at least one substituent selected from the group consisting of an ester group, a carboxyl group and a carboxylic acid salt group.

Particularly, $T^4$ may be an ester group which contains 2 to 30 carbon atoms, a carboxyl group or a carboxylic acid salt group. Also, $T^4$ may be a carboxyl group or a carboxylic acid salt group.
$T^1$ and $T^2$ may be each a hydrogen atom, and $T^3$ may be a hydrogen atom or a methyl group.
In the present invention, the polar group-containing olefin monomer represented by the general formula (1) where the substituent of $T^4$ is a carboxylic acid salt group, is the below-described ionomer of the present invention.
For $T^1$ to $T^3$, the carbon skeleton of the hydrocarbon group, alkoxy group and silyl group may contain a branch, a ring and/or an unsaturated bond.
For $T^1$ to $T^3$, the number of the carbon atoms of the hydrocarbon group ($R^{47}$-) may be as follows: the lower limit is 1 or more, and the upper limit is 20 or less or 10 or less.
For $T^1$ to $T^3$, the number of the carbon atoms of the alkoxy group ($R^{48}O$-) may be as follows: the lower limit is 1 or more, and the upper limit is 20 or less or 10 or less.
For $T^1$ to $T^3$, the number of the carbon atoms of the silyl group may be as follows: the lower limit is 1 or more or 3 or more, and the upper limit is 18 or less or 12 or less. As the silyl group, examples include, but are not limited to, a trimethylsilyl group, a triethylsilyl group, a tri-n-propylsilyl group, a triisopropylsilyl group, a dimethylphenylsilyl group, a methyldiphenylsilyl group and a triphenylsilyl group.
For $T^4$, the carbon skeleton of the alkoxycarbonyl group, hydrocarbon group, alkoxy group, acyloxy group, substituted amino group and substituted silyl group contains at least one functional group selected from the group consisting of an ester group, a carboxyl group and a carboxylic acid salt group.
For $T^4$, the carbon skeleton of the ester group, alkoxycarbonyl group, hydrocarbon group, alkoxy group, acyloxy group, substituted amino group and substituted silyl group may contain a branch, a ring and/or an unsaturated bond.
For $T^4$, the number of the carbon atoms of the ester group ($-COOR^{40}$) may be as follows, including the carbon atoms of the carbonyl group in the ester group: the lower limit is 2 or more, and the upper limit is 30 or less, 29 or less, 28 or less, 20 or less, 19 or less, 18 or less, 12 or less, 11 or less, 10 or less, 9 or less, or 8 or less.
For $T^4$, the number of the carbon atoms of the alkoxycarbonyl group ($-COOR^{41}$) may be as follows, including the carbon atoms of the carbonyl group in the alkoxycarbonyl group: the lower limit is 2 or more, and the upper limit is 30 or less or 20 or less. When part of the carbon skeleton of the alkoxycarbonyl group is substituted with an ester group, the number of the carbon atoms of the ester group is not particularly limited, as long as it is in the range that does not exceed the upper limit of the number of the carbon atoms of the alkoxycarbonyl group.
For $T^4$, the number of the carbon atoms of the hydrocarbon group ($R^{42}$-) may be as follows: the lower limit is 2 or more, and the upper limit is 20 or less or 10 or less. When part of the carbon skeleton of the hydrocarbon group is substituted with an ester group, the number of the carbon atoms of the ester group is not particularly limited, as long as it is in the range that does not exceed the upper limit of the number of the carbon atoms of the hydrocarbon group.
For $T^4$, the number of the carbon atoms of the alkoxy group ($R^{43}O$-) may be as follows: the lower limit is 1 or more, and the upper limit is 20 or less or 10 or less. When part of the carbon skeleton of the alkoxy group is substituted with an ester group, the number of the carbon atoms of the ester group is not particularly limited, as long as it is in the range that does not exceed the upper limit of the number of the carbon atoms of the alkoxy group.
For $T^4$, the number of the carbon atoms of the acyloxy group ($R^{44}COO$-) may be as follows, including the carbon atoms of the carbonyl group in the acyloxy group: the lower limit is 2 or more, and the upper limit is 20 or less or 10 or less. When part of the carbon skeleton of the acyloxy group is substituted with an ester group, the number of the carbon atoms of the ester group is not particularly limited, as long as it is in the range that does not exceed the upper limit of the number of the carbon atoms of the acyloxy group.
For $T^4$, the number of the carbon atoms of the substituted amino group may be as follows: the lower limit is 1 or more or 2 or more, and the upper limit is 12 or less or 9 or less. When part of the carbon skeleton of the substituted amino group is substituted with an ester group, the number of the carbon atoms of the ester group is not particularly limited, as long as it is in the range that does not exceed the upper limit of the number of the carbon atoms of the substituted amino group. In the substituted amino group ($(R^{45})_2N$-), two $R^{45}$s are each independently optionally a substituent containing 1 to 6 carbon atoms; the substituents optionally have the same carbon skeleton or different carbon

skeletons; and any one of them is optionally a hydrogen atom. As the amino group to be substituted with the substituent selected from the group consisting of an ester group, a carboxyl group and a carboxylic acid salt group, examples include, but are not limited to, a dimethylamino group, a diethylamino group, a di-n-propylamino group and a cyclohexylamino group.

For $T^4$, the number of the carbon atoms of the substituted silyl group may be as follows: the lower limit is 1 or more or 3 or more, and the upper limit is 18 or less or 12 or less. When part of the carbon skeleton of the substituted silyl group is substituted with an ester group, the number of the carbon atoms of the ester group is not particularly limited, as long as it is in the range that does not exceed the upper limit of the number of the carbon atoms of the substituted silyl group. In the substituted silyl group ($(R^{46})_3Si$-), three $R^{46}$s are each independently optionally a substituent containing 1 to 6 carbon atoms; the substituents optionally have the same carbon skeleton or different carbon skeletons; and as long as at least one $R^{46}$ contains a substituent containing 1 to 6 carbon atoms, other $R^{46}$ may be a hydrogen atom each. As the silyl group to be substituted with the substituent selected from the group consisting of an ester group, a carboxyl group and a carboxylic acid salt group, examples include, but are not limited to, a trimethylsilyl group, a triethylsilyl group, a tri-n-propylsilyl group, a triisopropylsilyl group, a dimethylphenylsilyl group, a methyldiphenylsilyl group and a triphenylsilyl group.

As the polar group-containing olefin monomer, examples include, but are not limited to, a (meth)acrylic acid and/or a (meth)acrylic acid ester.

The (meth)acrylic acid ester of the present invention is a compound represented by the following structural formula: $CH_2 = C(R^{21})CO_2(R^{22})$ where $R^{21}$ is a hydrogen atom or a hydrocarbon group containing 1 to 10 carbon atoms and optionally contains a branch, a ring and/or an unsaturated bond; $R^{22}$ is a hydrocarbon group containing 1 to 30 carbon atoms and optionally contains a branch, a ring and/or an unsaturated bond; and a heteroatom is optionally contained in any position of $R^{22}$.

As the (meth)acrylic acid ester, examples include a (meth) acrylic acid ester represented by $CH_2 = C(R^{21})CO_2(R^{22})$ where $R^{21}$ is a hydrogen atom or a hydrocarbon group containing 1 to 5 carbon atoms, an acrylic acid ester represented by $CH_2 = C(R^{21})CO_2(R^{22})$ where $R^{21}$ is a hydrogen atom, and a methacrylic acid ester represented by $CH_2 = C(R^{21})CO_2(R^{22})$ where $R^{21}$ is a methyl group.

As the (meth)acrylic acid ester, examples include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, hydroxyethyl (meth)acrylate, hydroxybutyl (meth)acrylate, 1,4-cyclohexanedimethanol mono(meth)acrylate, 4-hydroxybutyl (meth)acrylate glycidyl ether (4-HBAGE), 2-methoxyethyl (meth)acrylate, 3-methoxypropyl (meth)acrylate, glycidyl (meth)acrylate, ethylene oxide (meth)acrylate, trifluoromethyl (meth)acrylate, 2-trifluoromethylethyl (meth)acrylate and perfluoroethyl (meth)acrylate.

As the (meth)acrylic acid ester, examples include, but are not limited to, compounds such as methyl acrylate, ethyl acrylate, n-butyl acrylate, t-butyl acrylate (tBA), (4-hydroxybutyl)acrylate glycidyl ether and t-butyl methacrylate. Of them, the (meth)acrylic acid ester may be t-butyl acrylate.

As the polar group-containing olefin monomer, such (meth)acrylic acid esters may be used solely or in combination of two or more kinds.

As the metal ion (M) of the carboxylic acid salt group, examples include a monovalent or divalent metal of a group selected from the group consisting of Groups 1, 2 and 12 of the periodic table. In particular, examples include lithium (Li), sodium (Na), potassium (K), rubidium (Rb), magnesium (Mg), calcium (Ca) and zinc (Zn) ions. From the viewpoint of the ease of handleability, the metal ion may be a sodium (Na) or zinc (Zn) ion.

The carboxylic acid salt group is obtainable as follows, for example: after or while the ester group of the copolymer is hydrolyzed or thermally decomposed, the ester group is reacted with the compound which contains the metal ion of the Group 1, 2 or 12 of the periodic table to convert the ester group moiety of the copolymer into a metal-containing carboxylate, thereby obtaining the carboxylic acid salt group.

(3) Structural unit (C)

The structural unit (C) is a structural unit derived from a non-polar cyclic olefin represented by the following general formula (2):

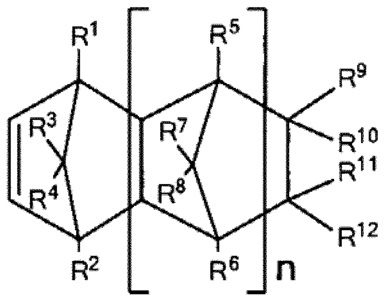

General Formula (2)

where $R^1$ to $R^{12}$ are each optionally the same or different and are each selected from the group consisting of a hydrogen atom, a halogen atom and a hydrocarbon group which contains 1 to 20 carbon atoms;

$R^9$ and $R^{10}$ are optionally integrated to form a divalent organic group, and $R^{11}$ and $R^{12}$ are optionally integrated to form a divalent organic group; $R^9$ or $R^{10}$ optionally forms a ring with $R^{11}$ or $R^{12}$; and
n is 0 or a positive integer, and when n is 2 or more, $R^5$ to $R^8$ are each optionally the same or different in each repeating unit.

As the non-polar cyclic olefin, examples include, but are not limited to, norbornene-based olefins and compounds containing a cyclic olefin skeleton such as norbornene, vinylnorbornene, ethylidene norbornene, norbornadiene, tetracyclododecene, tricyclo[4.3.0.$1^{2,3}$] and tricyclo[4.3.0.$1^{2,3}$]dec-3-en. The non-polar cyclic olefin may be 2-norbornene (NB), tetracyclo[6.2.1.$1^{3,6}$.$0^{2,7}$]dodeca-4-en, or the like.

(4) Multi-component, polar group-containing olefin copolymer

The multi-component, polar group-containing olefin copolymer of the present invention contains:

at least one structural unit (A) selected from the group consisting of a structural unit derived from ethylene and a structural unit derived from an $\alpha$-olefin which contains 3 to 20 carbon atoms,
a structural unit (B) derived from a polar group-containing olefin monomer represented by the following general formula (1), and
a structural unit (C) derived from a non-polar cyclic olefin represented by the following general formula (2).

The multi-component, polar group-containing olefin copolymer of the present invention needs to contain one or more kinds of the structural units (A), one or more kinds of the structural units (B), and one or more kinds of the structural units (C). That is, the multi-component, polar group-containing olefin copolymer of the present invention needs to contain a total of three or more kinds of monomer units.
Hereinafter, the structural units of the multi-component, polar group-containing olefin copolymer of the present invention and the amounts of the structural units (the structural unit amounts) will be described.
The structure derived from one molecule of the ethylene and/or $\alpha$-olefin (A) which contains 3 to 20 carbon atoms, the structure derived from one molecule of the polar group-containing olefin monomer (B), and the structure derived from one molecule of the non-polar cyclic olefin (C) are each defined as one structural unit of the multi-component, polar group-containing olefin copolymer.
The percentage by mol (mol %) of each structural unit when the whole structural units of the multi-component, polar group-containing olefin copolymer are defined as 100 mol %, is the structural unit amount.

· Structural unit amount of ethylene and/or $\alpha$-olefin (A) containing 3 to 20 carbon atoms

For the structural unit amount of the structural unit (A) of the present invention, the lower limit is 60.000 mol % or more, preferably 70.000 mol % or more, more preferably 80.000 mol % or more, even more preferably 85.000 mol % or more, still more preferably 87.000 mol % or more, and particularly preferably 91.400 mol % or more, and the upper limit is 97.999 mol % or less, preferably 97.990 mol % or less, more preferably 97.980 mol % or less, even more preferably 96.980 mol % or less, still more preferably 96.900 mol % or less, and particularly preferably 94.300 mol % or less.
When the structural unit amount derived from the ethylene and/or $\alpha$-olefin (A) which contains 3 to 20 carbon atoms is less than 60.000 mol %, the toughness of the multi-component, polar group-containing olefin copolymer is poor.

When the structural unit amount is more than 97.999 mol %, the crystallinity of the multi-component, polar group-containing olefin copolymer is high, and the transparency thereof is poor.

Structural unit amount of polar group-containing olefin monomer (B)

For the structural unit amount of the structural unit (B) of the present invention, the lower limit is 2.0 mol % or more, and preferably 2.9 mol % or more, and the upper limit is 20.0 mol % or less, preferably 15.0 mol % or less, more preferably 10.0 mol % or less, even more preferably 8.0 mol % or less, and particularly preferably 6.1 mol % or less.
When the structural unit amount derived from the polar group-containing olefin monomer (B) is less than 2.0 mol %, the adhesion of the multi-component, polar group-containing olefin copolymer to different kinds of highly-polar materials, is not sufficient. When the structural unit amount is more than 20.0 mol %, the multi-component, polar group-containing olefin copolymer fails to obtain sufficient mechanical properties.
The polar group-containing olefin monomer used may be one kind of polar group-containing olefin monomer, or it may be a combination of two or more kinds of polar group-containing olefin monomers.

· Structural unit amount of non-polar cyclic olefin (C)

For the structural unit amount of the structural unit (C) of the present invention, the lower limit is 0.100 mol % or more and preferably 1.200 mol % or more, and the upper limit is 20.000 mol % or less, preferably 15.000 mol % or less, more preferably 10.000 mol % or less, even more preferably 5.000 mol % or less, and particularly preferably 2.900 mol % or less.
When the structural unit amount derived from the non-polar cyclic olefin (C) is less than 0.001 mol %, the rigidity of the multi-component, polar group-containing olefin copolymer is not sufficient. When the structural unit amount is more than 20.000 mol %, the balance between the rigidity and toughness of the multi-component, polar group-containing olefin copolymer, is poor.
The non-polar cyclic olefin used may be one kind of non-polar cyclic olefin, or it may be a combination of two or more kinds of non-polar cyclic olefins.
· Method for measuring structural unit amount of polar group-containing monomer in multi-component, polar group-containing olefin copolymer
To quantitate the comonomer in the multi-component, polar group-containing olefin copolymer of the present invention, $^{13}$C-NMR is used. The $^{13}$C-NMR measurement conditions are as follows.

Sample temperature: 120°C
Pulse angle: 90°
Pulse interval: 51.5 sec
Accumulated number of times: 512 or more
Measurement method: Inverse gated decoupling

The $^{13}$C signal of hexamethyldisiloxane is set to 1.98 ppm, and the chemical shifts of other $^{13}$C signals are based on this.

<E/tBA>

The quaternary carbon signal of the t-butyl acrylate group of tBA is detected at 79.6 ppm to 78.8 ppm of the $^{13}$C-NMR spectrum. Using these signal intensities, the comonomer amount is calculated from the following formula.

$$\text{tBA total amount (mol \%)} = I_{(tBA)} \times 100 / [I_{(tBA)} + I_{(E)}]$$

In this formula, $I_{(tBA)}$ and $I_{(E)}$ are amounts represented by the following formulae.

$$I_{(tBA)} = I_{79.6-78.8}$$

$$I_{(E)} = (I_{180.0-135.0} + I_{120.0-2.0} - I_{(tBA)} \times 7) / 2$$

<E/tBA/NB>

The quaternary carbon signal of the t-butyl acrylate group of tBA is detected at 79.6 ppm to 78.8 ppm of the $^{13}$C-NMR spectrum. The methine carbon signal of norbornene (NB) is detected at 41.9 ppm to 41.1 ppm. Using these signal intensities, the comonomer amount is calculated from the following formulae.

$$\text{tBA total amount (mol \%)} = I_{(tBA)} \times 100 / [I_{(tBA)} + I_{(NB)} + I_{(E)}]$$

$$\text{NB total amount (mol \%)} = I_{(NB)} \times 100 / [_{(tBA)} + I_{(NB)} + I_{(E)}]$$

In these formulae, $I_{(tBA)}$, $I_{(NB)}$ and $I_{(E)}$ are amounts represented by the following formulae.

$$I_{(tBA)} = I_{79.6-78.8}$$

$$I_{(NB)} = I_{41.9-41.1} / 2$$

$$I_{(E)} = (I_{180.0-135.0} + I_{120.0-2.0} - I_{(NB)} \times 7 - I_{(tBA)} \times 7) / 2$$

<E/tBA/TCD>

The quaternary carbon signal of the t-butyl acrylate group of tBA is detected at 79.6 ppm to 78.8 ppm of the $^{13}$C-NMR spectrum. The methylene and methine signals of tetracyclododecene (TCD) are detected at 45.0 ppm to 38.0 ppm and 37.3 ppm to 34.5 ppm, respectively. Using these signal intensities, the comonomer amounts are calculated from the following formulae.

$$\text{tBA total amount (mol \%)} = I_{(tBA)} \times 100 / [I_{(tBA)} + I_{(TCD)} + I_{(E)}]$$

$$\text{TCD total amount (mol \%)} = I_{(TCD)} \times 100 / [I_{(tBA)} + I_{(TCD)} + I_{(E)}]$$

In the above formulae, $I_{(tBA)}$, $I_{(TCD)}$ and $I_{(E)}$ are amounts represented by the following formulae.

$$I_{(tBA)} = I_{79.6-78.8}$$

$$I_{(TCD)} = (I_{45.0-38.0} + I_{37.3-34.5}) / 6$$

$$I_{(E)} = (I_{180.0-135.0} + I_{120.0-2.0} - I_{(TCD)} \times 12 - I_{(tBA)} \times 7) / 2$$

In the above formulae, "I" denotes an integrated intensity, and numerical subscripts following "I" indicates a chemical shift range. For example, "$I_{180.0-135.0}$" indicates the integrated intensity of the carbon signal detected between 180.0 ppm and 135.0 ppm.

· Number of methyl branches per 1,000 carbon atoms

For the multi-component, polar group-containing olefin copolymer of the present invention, the number of methyl

branches is calculated by $^{13}$C-NMR. The upper limit of the number of the methyl branches is 5 or less per 1,000 carbon atoms, or it may be 0.8 or less per 1,000 carbon atoms. The lower limit is not particularly limited and may be as small as possible.

To quantitate the number of the methyl branches, $^{13}$C-NMR is used. The $^{13}$C-NMR measurement conditions are as follows.

Sample temperature: 120°C
Pulse angle: 90°
Pulse interval: 51.5 sec
Accumulated number of times: 512 or more
Measurement method: Inverse gated decoupling

The $^{13}$C signal of hexamethyldisiloxane is set to 1.98 ppm, and the chemical shifts of other $^{13}$C signals are based on this.

· Weight average molecular weight (Mw) and molecular weight distribution (Mw/Mn)

For the weight average molecular weight (Mw) of the multi-component, polar group-containing olefin copolymer of the present invention, the lower limit is generally 1,000 or more, and preferably 6,000 or more, and the upper limit is generally 2,000,000 or less, preferably 1,500,000 or less, more preferably 1,000,000 or less, particularly preferably 800,000 or less, and most preferably 39,000 or less.

When the Mw is less than 1,000, the physical properties (e.g., mechanical strength and impact resistance) of the multi-component, polar group-containing olefin copolymer are not sufficient. When the Mw is more than 2,000,000, the melt viscosity of the multi-component, polar group-containing olefin copolymer is very high, and mold processing of the multi-component, polar group-containing olefin copolymer is difficult.

The ratio (Mw/Mn) of the weight average molecular weight (Mw) to the number average molecular weight (Mn) of the multi-component, polar group-containing olefin copolymer of the present invention, ranges generally from 1.5 to 4.0, preferably from 1.6 to 3.3, and more preferably from 1.6 to 2.3. When the ratio Mw/Mn is less than 1.5, various processing properties (e.g., molding properties) of the multi-component, polar group-containing olefin copolymer are insufficient. When the ratio Mw/Mn is more than 4.0, the mechanical properties of the multi-component, polar group-containing olefin copolymer are poor.

In the present invention, the ratio Mw/Mn may be referred to as a molecular weight distribution parameter.

In the present invention, the weight average molecular weight (Mw) and the number average molecular weight (Mn) are obtained by gel permeation chromatography (GPC). The molecular weight distribution parameter (Mw/Mn) is calculated as follows: in addition to the weight average molecular weight (Mw), the number average molecular weight (Mn) is obtained by gel permeation chromatography (GPC) and the ratio of Mw to Mn (Mw/Mn) is calculated.

An example of the GPC measurement method is as follows.

(Measurement conditions)

Device: 150C manufactured by Waters Corporation
Detector: "MIRAN1A-IR" manufactured by FOXBORO (measurement wavelength: 3.42 um)
Measurement temperature: 140°C
Solvent: Ortho-dichlorobenzene (ODCB)
Columns: AD806M/S manufactured by Showa Denko K. K. (Number of the columns: 3)
Flow rate: 1.0 mL/min
Injected amount: 0.2 mL

(Preparation of sample)

As a sample, ODCB (containing 0.5 mg/mL BHT (2,6-di-t-butyl-4-methylphenol)) is used to prepare a 1 mg/mL solution and dissolved at 140°C for about one hour.

(Calculation of molecular weight (M))

The molecular weight is calculated by the standard polystyrene method. The conversion from retention volume to molecular weight is carried out by use of calibration curves prepared by standard polystyrenes in advance.

The standard polystyrenes used are the following products manufactured by Tosoh Corporation: F380, F288, F128, F80, F40, F20, F10, F4, F1, A5000, A2500 and A1000. A solution is prepared by dissolving each standard polystyrene in ODCB (containing 0.5 mg/mL BHT) to be 0.5 mg/mL. Next, 0.2 mL of the solution is injected to generate a calibration curve. The calibration curve makes use of a cubic formula obtained by approximation by the least-squares method. A viscosity formula ($[\eta] = K \times M\alpha$) is used for conversion to molecular weight (M) and makes use of the following numerical values.

Polystyrene (PS): $K = 1.38 \times 10^{-4}$, $\alpha = 0.7$
Polyethylene (PE): $K = 3.92 \times 10^{-4}$, $\alpha = 0.733$
Polypropylene (PP): $K = 1.03 \times 10^{-4}$, $\alpha = 0.78$

· Melting point (°C)

For the multi-component, polar group-containing olefin copolymer of the present invention, a melting point (Tm) (°C) observed by differential scanning calorimetry and a total content [Z] (mol %) of the structural unit (B) and the structural unit (C) may satisfy the following formula (I):

$$\text{Formula (I): } 50 < Tm < -3.74 \times [Z] + 130.$$

It was found that the factors that make an influence on the mechanical properties of the multi-component, polar group-containing olefin copolymer, include the total content (Z) of the structural units (B) and (C) of the multi-component, polar group-containing olefin copolymer and the melting point of the multi-component, polar group-containing olefin copolymer. It was also found that as the melting point decreases, the multi-component, polar group-containing olefin copolymer shows better mechanical properties.

However, as a result of research made by the inventor, the following was found: for example, in the case of the bipolymer of the structural unit (A) (ethylene) and the structural unit (B), the melting point of the copolymer depends on the content of the structural unit (B), and decreasing the melting point lower than $-3.74 \times [Z] + 130$ (°C) is very difficult and limits the improvement in the mechanical properties.

Accordingly, when the melting point of the copolymer of the present invention is more than $-3.74 \times [Z] + 130$ (°C), no improvement in the mechanical properties is expected, and the mechanical properties are less likely to be sufficiently exerted. When the melting point is less than 50°C, the minimum heat resistance required of the ethylene-based copolymer is less likely to be maintained.

For example, using "EXSTAR 6000" (manufactured by Seiko Instruments, Inc.), the temperature of the copolymer is kept at 40°C for one minute, increased from 40°C to 160°C at a rate of 10°C/min, kept at 160°C for 10 minutes, decreased from 160°C to 10°C at a rate of 10°C/min, and kept at 10°C for 5 minutes. Then, the melting point can be obtained by measurement when the temperature of the copolymer is increased from 10°C to 160°C at a rate of 10°C/min.

The melting point Tm of the multi-component, polar group-containing olefin copolymer of the present invention is not particularly limited, as long as the relationship represented by the above-described formula (I) is met. In the case of polyethylene, the melting point is preferably more than 50°C and 140°C or less, more preferably from 60°C to 138°C, and most preferably from 70°C to 135°C. When the melting point is 50°C or less, the heat resistance of the multi-component, polar group-containing olefin copolymer is not sufficient. When the melting point is higher than 140°C, the impact resistance of the multi-component, polar group-containing olefin copolymer is poor.

· Crystallinity (%)

For the multi-component, polar group-containing olefin copolymer of the present invention, the crystallinity observed by differential scanning calorimetry (DSC) is not particularly limited. The crystallinity is preferably more than 0% and 30% or less, more preferably more than 0% and 25% or less, particularly preferably more than 5% and 25% or less, and most preferably 7% or more and 24% or less.

When the crystallinity is 0%, the toughness of the multi-component, polar group-containing olefin copolymer is not sufficient. When the crystallinity is more than 30%, the transparency of the multi-component, polar group-containing olefin copolymer is poor. The crystallinity serves as the index of transparency. As the crystallinity of the multi-component, polar group-containing olefin copolymer decreases, the transparency thereof can be determined to be better.

For example, the crystallinity can be obtained as follows: using "EXSTAR 6000" (manufactured by Seiko Instruments, Inc.), the melting heat (ΔH) of the copolymer is obtained from a melting endothermic peak area of the copolymer, which is obtained when the temperature of the copolymer is increased from room temperature to 160°C, and the melting heat is divided by the melting heat (293 J/g) of a perfect crystal of high-density polyethylene (HDPE), thereby obtaining the crystallinity.

· Molecular structure of multi-component, polar group-containing olefin copolymer

As the multi-component, polar group-containing olefin copolymer of the present invention, examples include, but are not limited to, random, block and graft copolymers of the structural units (A), (B) and (C). Of them, the multi-component, polar group-containing olefin copolymer may be the random copolymer that can contain many polar groups.
The molecular chain terminals of the multi-component, polar group-containing olefin copolymer of the present invention may be the structural units (A), (B) and (C).
The multi-component, polar group-containing olefin copolymer of the present invention may be produced in the presence of a transition metal catalyst, from the viewpoint of rendering the molecular structure a straight-chain molecular structure.
The molecular structure of the multi-component, polar group-containing olefin copolymer is known to vary by the production method, such as polymerization by a high-pressure radical polymerization process, polymerization by use of a metal catalyst, etc.
The difference in the molecular structure can be controlled by the selected production method. For example, as described in JP-A No. 2010-150532, the molecular structure can be estimated by the complex modulus measured with a rotational rheometer.

· Phase angle $\delta$ at which absolute value G* of complex modulus is 0.1 MPa (G* = 0.1 MPa)

For the multi-component, polar group-containing olefin copolymer of the present invention, the phase angle $\delta$ at which the absolute value G* of the complex modulus measured with the rotational rheometer is 0.1 MPa (G* = 0.1 MPa), is as follows: the lower limit is 50 degrees or more or 51 degrees or more, and the upper limit is 75 degrees or less or 63 degrees or less.
More specifically, when the phase angle $\delta$ at which the absolute value G* of the complex modulus measured with the rotational rheometer is 0.1 MPa (G* = 0.1 MPa) is 50 degrees or more, the molecular structure of the multi-component, polar group-containing olefin copolymer is a straight-chain structure which does not contain a long-chain branch or which contains small amounts of long-chain branches to the extent that does not make an influence on the mechanical strength.
When the phase angle $\delta$ at which the absolute value G* of the complex modulus measured with the rotational rheometer is 0.1 MPa (G* = 0.1 MPa) is less than 50 degrees, the molecular structure of the multi-component, polar group-containing olefin copolymer is a structure which contains excessive amounts of long-chain branches, and the mechanical strength is poor.
The phase angle $\delta$ at which the absolute value G* of the complex modulus measured with the rotational rheometer is 0.1 MPa (G* = 0.1 MPa) is influenced by both the molecular weight distribution and the long-chain branches. However, only in the case of the multi-component, polar group-containing olefin copolymer for which the ratio Mw/Mn is 4 or less, and more preferably 3 or less, the phase angle $\delta$ serves as the index of the amount of the long-chain branches, and as the amount of the long-chain branches contained in the molecular structure increases, the $\delta$ value (G* = 0.1 MPa) decreases. When the ratio Mw/Mn of the multi-component, polar group-containing olefin copolymer is 1.5 or more, the $\delta$ value (G* = 0.1 MPa) does not exceed 75 degrees even in the case where the molecular structure does not contain a long-chain branch.
The method for measuring the complex modulus is as follows.
The sample is put in a 1.0 mm-thick heat pressing mold and pre-heated for 5 minutes in a heat pressing device with a surface temperature of 180°C. Then, pressure application and reduction are repeatedly carried out on the sample to deaerate residual gas in the melted resin. In addition, pressure application at 4.9 MPa is carried out on the sample and kept for 5 minutes. Then, the sample is transferred to a pressing device with a surface temperature of 25°C and kept at a pressure of 4.9 MPa for 3 minutes to cool down, thereby producing a pressed plate composed of the sample with a thickness of about 1.0 mm. The pressed plate composed of the sample is formed into a circle with a diameter of 25 mm and used as a sample. Using an ARES-type rotational rheometer (manufactured by Rheometrics) as a dynamic viscoelasticity measuring device, the dynamic viscoelasticity of the sample is measured under a nitrogen atmosphere in the following conditions.

- Plate: Parallel plate (diameter 25 mm)

- Temperature: 160°C
- Distortion amount: 10%
- Measurement angular frequency range: $1.0 \times 10^{-2}$ rad/s to $1.0\times10^{2}$ rad/s
- Measurement interval: 5 Points/decade

The phase angle δ is plotted with respect to the common logarithm log G* of the absolute value G* (Pa) of the complex modulus. The value of δ (degree) of a point corresponding log G* = 5.0, is determined as δ (G* = 0.1 MPa). If measured points do not include the point corresponding to log G* = 5.0, using two points before and after log G* = 5.0, the δ value at log G* = 5.0 is obtained by linear interpolation. When all the measured points correspond to log G* < 5, using the values of three points with larger log G* values, the δ value at log G* = 5.0 in a quadratic curve, is obtained by extrapolation.

· Infrared absorption spectrum

The copolymer is melted at 180°C for 3 minutes and then subjected to compression forming to produce a film with a thickness of about 50 um.

The film was analyzed by Fourier transform infrared spectroscopy to obtain the infrared absorption spectrum of the copolymer.

Product name: FT/IR-6100 (manufactured by JASCO Corporation)
Measurement method: Transmission method
Detector: Triglycine sulfate (TGS)
Accumulated number of times: 16 to 64
Resolving power: 4.0 $cm^{-1}$
Measurement wavelength: 5000 $cm^{-1}$ to 500 $cm^{-1}$

· Molecular structure of multi-component, polar group-containing olefin copolymer

The multi-component, polar group-containing olefin copolymer of the present invention may be a random copolymer.

The molecular structure example (1) of a common ternary polar group-containing olefin copolymer is shown below.

The random copolymer is such a copolymer that the probability that ethylene or the structural unit (A) (the α-olefin which contains 3 to 20 carbon atoms), the structural unit (B) (the polar group-containing monomer) and the structural unit (C) (the non-polar cyclic olefin) in the molecular structure example (1) shown below, find each other at any position in any molecular chain, is irrelevant to the type of adjacent structural units.

The molecular chain terminals of the polar group-containing olefin copolymer may be ethylene or the structural unit (A) (the α-olefin which contains 3 to 20 carbon atoms), may be the structural unit (B) (the polar group-containing monomer), or may be the structural unit (C) (the non-polar cyclic olefin).

As shown below, in the molecular structure example (1) of the polar group-containing olefin copolymer, the random copolymer is formed by ethylene and/or the structural unit (A) (the α-olefin which contains 3 to 20 carbon atoms), the structural unit (B) (the polar group-containing monomer), and the structural unit (C) (the non-polar cyclic olefin).

**-ABCAAABBCBAABACCAA-** Molecular structure example (1)

As a reference, the molecular structure example (2) of an olefin copolymer will be shown below, in which a polar group is introduced by graft modification. As shown in the example, a part of the olefin copolymer obtained by copolymerization of ethylene and/or the structural unit (A) (the α-olefin which contains 3 to 20 carbon atoms) and the structural unit (C) (the non-polar cyclic olefin) is graft-modified by the structural unit (B) (the polar group-containing monomer).

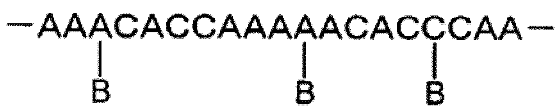

Molecular structure example (2)

(5) Production of multi-component, polar group-containing olefin copolymer

The multi-component, polar group-containing olefin copolymer of the present invention may be a multi-component, polar group-containing olefin copolymer produced in the presence of a transition metal catalyst, from the viewpoint of rendering the molecular structure a straight-chain structure.

· Polymerization catalyst

A polymerization catalyst is used to produce the multi-component, polar group-containing olefin copolymer of the present invention. The type of the polymerization catalyst is not particularly limited, as long as it can copolymerize the structural units (A), (B) and (C). As the polymerization catalyst, examples include, but are not limited to, transition metal compounds of Groups 5 to 11 of the periodic table, the compounds having a chelating ligand.

Preferred transition metal examples include a vanadium atom, a niobium atom, a tantalum atom, a chromium atom, a molybdenum atom, a tungsten atom, a manganese atom, an iron atom, a platinum atom, a ruthenium atom, a cobalt atom, a rhodium atom, a nickel atom, a palladium atom and a copper atom. Of them, preferred are transition metals of Groups 8 to 11 of the periodic table; more preferred are transition metals of Group 10 of the periodic table; and particularly preferred are nickel (Ni) and palladium (Pd). These metals may be used solely or in combination of two or more kinds.

The chelating ligand contains at least two atoms selected from the group consisting of P, N, O and S. It includes bidentate and multidentate ligands, and it is electrically neutral or anionic. Examples of the structure of the chelating ligand are illustrated in reviews by Brookhart, et al. (Chem. Rev., 2000, 100, 1169).

As the chelating ligand, a bidentate anionic P,O ligand is preferred. As the bidentate anionic P,O ligand, examples include, but are not limited to, phosphorus sulfonic acid, phosphorus carboxylic acid, phosphorus phenol and phosphorus enolate. As the chelating ligand, examples also include, but are not limited to, a bidentate anionic N,O ligand. As the bidentate anionic N,O ligand, examples include, but are not limited to, salicylaldiminato and pyridinecarboxylic acid. As the chelating ligand, examples also include, but are not limited to, a diimine ligand, a diphenoxide ligand and a diamide ligand.

The structure of the metal complex obtained from the chelating ligand is represented by the following structural formula (a) or (b) with which an arylphosphine, aryl arsine or aryl antimony compound optionally containing a substituent, is coordinated:

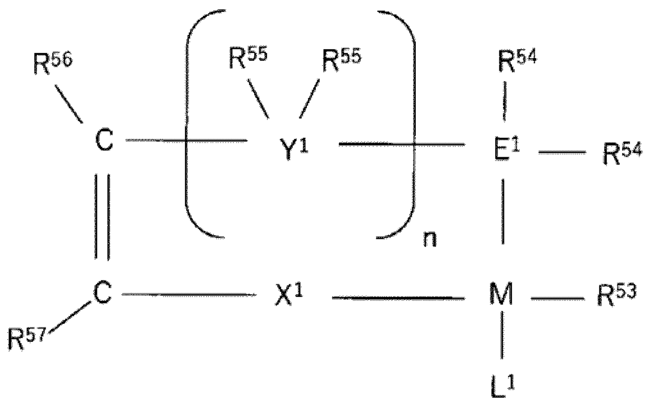

Structural Formula (a)

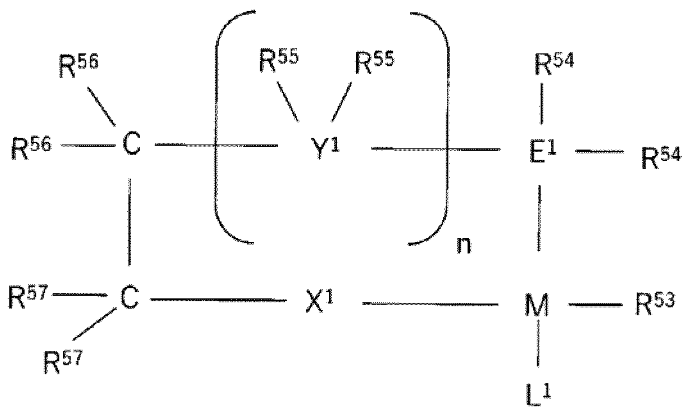

Structural Formula (b)

where M is a transition metal of any of Groups 5 to 11 of the periodic table, that is, the above-described various kinds of transition metals; $X^1$ is an oxygen atom, a sulfur atom, $-SO_3-$ or $-CO_2-$; $Y^1$ is a carbon atom or a silicon atom; n is an integer of from 0 or 1; $E^1$ is a phosphorus atom, an arsenic atom or an antimony atom; $R^{53}$ and $R^{54}$ are each independently a hydrogen atom or a hydrocarbon group containing 1 to 30 carbon atoms and optionally containing a heteroatom; $R^{55}$ is each independently a hydrogen atom, a halogen atom or a hydrocarbon group containing 1 to 30 carbon atoms and optionally containing a heteroatom; $R^{56}$ and $R^{57}$ are each independently a hydrogen atom, a halogen atom, a hydrocarbon group containing 1 to 30 carbon atoms and optionally containing a heteroatom, $OR^{52}$, $CO_2R^{52}$, $CO_2M'$, $C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group; $R^{51}$ is a hydrogen atom or a hydrocarbon group containing 1 to 20 carbon atoms; $R^{52}$ is a hydrocarbon group containing 1 to 20 carbon atoms; M' is an alkali metal, an alkaline-earth metal, an ammonium, a quaternary ammonium or a phosphonium; x is an integer of from 0 to 3; y is an integer of from 0 to 2; $R^{56}$ and $R^{57}$ are optionally bound to form an alicyclic ring, an aromatic ring or a heterocyclic ring containing a heteroatom selected from an oxygen atom, a nitrogen atom and a sulfur atom, the ring being a 5- to 8-membered ring optionally having a substituent thereon; $L^1$ is a ligand coordinated with M; and $R^{53}$ and $L^1$ are optionally bound to form a ring.

More preferably, the metal complex is a transition metal complex represented by the following structural formula (c):

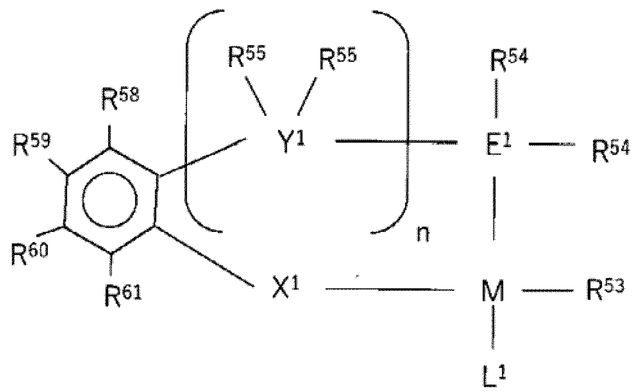

Structural Formula (c)

where M is a transition metal of any of Groups 5 to 11 of the periodic table, that is, the above-described various kinds of transition metals; $X^1$ is an oxygen atom, a sulfur atom, $-SO_3-$ or $-CO_2-$; $Y^1$ is a carbon atom or a silicon atom; n is an integer of 0 or 1; $E^1$ is a phosphorus atom, an arsenic atom or an antimony atom; $R^{53}$ and $R^{54}$ are each independently a hydrogen atom or a hydrocarbon group containing 1 to 30 carbon atoms and optionally containing a heteroatom; $R^{55}$ is each independently a hydrogen atom, a halogen atom, or a hydrocarbon group containing 1 to 30 carbon atoms and optionally containing a heteroatom; $R^{38}$, $R^{59}$, $R^{60}$ and $R^{61}$ are each independently a hydrogen atom, a halogen atom, a hydrocarbon group containing 1 to 30 carbon atoms and optionally containing a heteroatom, $OR^{52}$, $CO_2R^{52}$, $CO_2M'$,

$C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group; $R^{51}$ is a hydrogen atom or a hydrocarbon group containing 1 to 20 carbon atoms; $R^{52}$ is a hydrocarbon group containing 1 to 20 carbon atoms; M' is an alkali metal, an alkaline-earth metal, an ammonium, a quaternary ammonium or a phosphonium; x is an integer of from 0 to 3; y is an integer of from 0 to 2; groups appropriately selected from $R^{58}$ to $R^{61}$ are optionally bound to form an alicyclic ring, an aromatic ring, or a heterocyclic ring containing a heteroatom selected from an oxygen atom, a nitrogen atom and a sulfur atom, and the formed ring is a 5- to 8-membered ring optionally having a substituent thereon; $L^1$ is a ligand coordinated with M; and $R^{53}$ and $L^1$ are optionally bound to form a ring.

As the catalyst of the transition metal compounds of Groups 5 to 11 of the periodic table, the compounds having a chelating ligand, catalysts such as a so-called SHOP-based catalyst and a so-called Drent-based catalyst are typically known.

The SHOP-based catalyst is a catalyst in which a phosphorus-based ligand containing an aryl group optionally containing a substituent, is coordinated with a nickel metal (for example, see WO2010/050256).

The Drent-based catalyst is a catalyst in which a phosphorus-based ligand containing an aryl group optionally containing a substituent, is coordinated with a palladium metal (for example, see JP-A No. 2010-202647).

. Organometallic compound

In the production of the multi-component, polar group-containing olefin copolymer of the present invention, polymerization activity is increased by bringing the polar group-containing olefin monomer into contact with a small amount of organometallic compound and then copolymerizing the structural units (A), (B) and (C) in the presence of the transition metal catalyst.

The organometallic compound is an organometallic compound containing a hydrocarbon group optionally containing a substituent. It is represented by the following structural formula (d):

Structural formula (d) $R^{30}nM^{30}X^{30}m-n$

where $R^{30}$ is a hydrocarbon group containing 1 to 12 carbon atoms and optionally containing a substituent; $M^{30}$ is a metal selected from the group consisting of Groups 1, 2, 12 and 13 of the periodic table; $X^{30}$ is a halogen atom or a hydrogen atom; m is the valence of $M^{30}$; and n is from 1 to m.

As the organometallic compound represented by the structural formula (d), examples include, but are not limited to, alkylaluminums such as tri-n-butylaluminum, tri-n-hexylaluminum, tri-n-octylaluminium and tri-n-decylaluminum, and alkylaluminum halides such as methylaluminum dichloride, ethylaluminum dichloride, dimethylaluminum chloride, diethylaluminum chloride and diethylaluminum ethoxide. Of them, trialkylaluminum is preferred.

The organometallic compound is more preferably trialkylaluminum containing 4 or more carbon atoms and a hydrocarbon group, even more preferably trialkylaluminum containing 6 or more carbon atoms and a hydrocarbon group, still more preferably tri-n-hexylaluminum, tri-n-octylaluminium or tri-n-decylaluminum, and most preferably tri-n-octylaluminium.

From the viewpoints of polymerization activity and costs, the amount of the organometallic compound brought into contact with the polar group-containing olefin monomer, is preferably such an amount that gives a mol ratio of from $10^{-5}$ to 0.9, preferably from $10^{-4}$ to 0.2, and more preferably from $10^{-4}$ to 0.1, with respect to the polar group-containing olefin comonomer.

Method for polymerizing multi-component, polar group-containing olefin copolymer

The method for polymerizing the multi-component, polar group-containing olefin copolymer of the present invention, is not particularly limited.

As the polymerizing method, examples include, but are not limited to, the following methods: slurry polymerization in which at least part of a produced polymer is made into slurry in a medium, bulk polymerization in which a liquefied monomer itself is used as a medium, gas phase polymerization carried out in a vaporized monomer, and high-pressure ionic polymerization in which at least part of a produced polymer is dissolved in a monomer liquefied at high temperature and high pressure.

The polymerizing method may be any of batch polymerization, semi-batch polymerization and continuous polymerization.

Also, living polymerization may be carried out, or polymerization may be carried out with accompanying chain transfer.

In the polymerization, a chain shuttling reaction or a coordinative chain transfer polymerization (CCTP) may be carried out by use of a so-called chain shuttling agent (CSA).

Detailed production process and conditions are disclosed in JP-A Nos. 2010-260913 and 2010-202647, for example.

· Method for introducing polar group in multi-component, polar group-containing olefin copolymer

The method for introducing a polar group into the multi-component, polar group-containing olefin copolymer of the present invention, is not particularly limited.
A specific polar group can be introduced by various kinds of methods, without departing from the scope of the present invention.
As the polar group introducing method, examples include, but are not limited to, the following methods: a method of directly copolymerizing a monomer and a polar group-containing comonomer containing a specific polar group, and a method of copolymerizing a monomer and a different polar group-containing comonomer and then introducing a specific polar group by modification.
As the method for introducing a specific polar group by modification, examples include, but are not limited to, the following method: in the case of introducing carboxylic acid, a method of copolymerizing a monomer and t-butyl acrylate and then turning the copolymer into carboxylic acid by thermal decomposition.

(6) Additives

To the multi-component, polar group-containing olefin copolymer of the present invention, conventionally-known additives may be added without departing from the scope of the present invention, such as an antioxidant, an ultraviolet absorber, a lubricant, an antistatic agent, a colorant, a pigment, a crosslinking agent, a foaming agent, a nucleating agent, a flame retardant, an electroconductive material and a filler.

(7) Ionomer

The ionomer of the present invention has the following structure: at least part of the polar groups of the multi-component, polar group-containing olefin copolymer of the present invention, are neutralized by a metal ion.
That is, the ionomer of the present invention is represented by the general formula (1) where the substituent of $T^4$ is a carboxylic acid salt group.
Accordingly, when the multi-component, polar group-containing olefin copolymer of the present invention is the ionomer, at least part of $T^4$ in the general formula (1) may be a substituent selected from the group consisting of:

a carboxylic acid salt group,
an alkoxycarbonyl group which contains 2 to 20 carbon atoms and in which part of a carbon skeleton is substituted with a carboxylic acid salt group,
a hydrocarbon group which contains 2 to 20 carbon atoms and in which part of a carbon skeleton is substituted with a carboxylic acid salt group,
an alkoxy group which contains 1 to 20 carbon atoms and in which part of a carbon skeleton is substituted with a carboxylic acid salt group,
an acyloxy group which contains 2 to 20 carbon atoms and in which part of a carbon skeleton is substituted with a carboxylic acid salt group,
a substituted amino group which contains 1 to 12 carbon atoms and in which part of a carbon skeleton is substituted with a carboxylic acid salt group, and
a substituted silyl group which contains 1 to 18 carbon atoms and in which part of a carbon skeleton is substituted with a carboxylic acid salt group.

· Metal ion

The metal ion contained in the ionomer is not particularly limited. The ionomer may contain a metal ion that is applicable to conventionally-known ionomers. The metal ion is preferably a metal ion of Group 1, 2 or 12 of the periodic table, and more preferably at least one selected from the group consisting of $Li^+$, $Na^+$, $K^+$, $Rb^+$, $Cs^+$, $Mg^{2+}$, $Ca^{2+}$, $Sr^{2+}$, $Ba^{2+}$ and $Zn^{2+}$. As needed, the ionomer may contain a combination of two or more kinds of these metal ions.

· Neutralization degree (mol %)

The content of the metal ion is preferably such a content that causes at least part or all of the polar groups in the multi-component, polar group-containing olefin copolymer (the base polymer) to be neutralized. The neutralization

degree (average neutralization degree) is preferably from 5 mol % to 95 mol %, more preferably from 10 mol % to 90 mol %, and even more preferably from 20 mol % to 80 mol %.

When the neutralization degree is high, the tensile strength and tensile fracture stress of the ionomer are high, and the tensile fracture distortion is small. However, the melt flow rate (MFR) of the ionomer tends to be high. On the other hand, if the neutralization degree is low, the ionomer obtains an appropriate MFR. However, the tensile modulus and tensile fracture stress of the ionomer tend to be low, the tensile fracture distortion tends to be high.

The neutralization degree can be calculated from the content of the polar group-containing olefin monomer (the polar group-containing comonomer) and the mol ratio of the added metal ion.

## Examples

Hereinafter, the present invention will be further explained by the following examples. The present invention is not limited by the examples, without departing from the scope of the present invention. The physical properties and so on of the multi-component, polar group-containing olefin copolymer, etc., were measured by the following methods.

[Unit amount of polar group-containing structure in multi-component, polar group-containing olefin copolymer]

· Pre-treatment of sample

When a sample contained a carboxylic acid salt group, the sample was subjected to an acid treatment to modify the carboxylic acid salt group to a carboxylic acid group. Then, the sample was used for measurement.

The unit amount of the polar group-containing structure in the multi-component, polar group-containing olefin copolymer was obtained by use of the $^{13}$C-NMR spectrum. The details are described above.

[MFR] (g/10 min)

In accordance with JIS K 6922-2:2010, the melt flow rate (MFR) of the sample was measured at a temperature of 190°C and a load of 2.16 kg.

[Melting point (Tm) and crystallinity]

The melting point of the sample was indicated by the peak temperature of an endothermic curve measured by a differential scanning calorimeter (DSC). The DSC (product name: DSC 7020, manufactured by SII NanoTechnology Inc.) was used for measurement in the following measurement conditions.

First, the sample (about 5.0 mg) was packed in an aluminum pan. The temperature of the sample was increased to 200°C at a rate of 10°C/min, kept at 200°C for 5 minutes, decreased to 30°C at a rate of 10°C/min, kept at 30°C for 5 minutes, and then increased again at a rate of 10°C/min to obtain an absorption curve. In the absorption curve, the maximum peak temperature was determined as a melting point (Tm), and a melting heat (ΔH) was obtained from the melting endothermic peak area. The melting heat was divided by the melting heat (293 J/g) of a perfect crystal of high-density polyethylene (HDPE) to obtain a crystallinity (%).

[Mw/Mn]

· Pre-treatment of sample

When a sample contained a carboxylic acid group, the sample was subjected to an esterification treatment such as methyl esterification using diazomethane or tetramethylsilane (TMS) diazomethane, for example. Then, the sample was used for measurement. When a sample contained a carboxylic acid salt group, the sample was subjected to an acid treatment to modify the carboxylic acid salt group to a carboxylic acid group. Then, the sample was subjected to the above-described esterification treatment and used for measurement.

The Mw/Mn of the sample was measured by gel permeation chromatography (GPC).

- Device: ALLIANCE GPCV2000 manufactured by Nihon Waters K.K.
- Detector: Refractive index detector with built-in GPCV2000
- Sample preparation

First, 3 mg of the sample and 3 mL of ortho-dichlorobenzene (containing 0.1 mg/mL 1,2,4-trimethylphenol) were put in a 4 mL vial. The vial was sealed with a resin screw cap and a Teflon (trade name) septum. Then, the sample

was dissolved for 2 hours with a high-temperature shaking device ("SSC-9300" manufactured by Senshu Scientific Co., Ltd.) at a temperature of 150°C. After the end of the dissolution, the absence of insoluble matters in the sample was confirmed by visual observation.

· Columns: SHODEX HT-806M manufactured by Showa Denko K. K. (Number of the columns: 2)

· Creation of HT-G calibration curve

Four 4 mL glass vials were prepared. The following monodisperse polystyrene standard samples (mixtures) (i) to (iv) were prepared. Then, the samples (0.2 mg each) were put in the glass vials, followed by 3 mL of ortho-dichlorobenzene (containing 0.1 mg/mL 1,2,4-trimethylphenol). The glass vial was sealed with a resin screw cap and a Teflon (trade name) septum. Then, the monodisperse polystyrene standard sample was dissolved for 2 hours with the high-temperature shaking device ("SSC-9300" manufactured by Senshu Scientific Co., Ltd.) at a temperature of 150°C.

(i) SHODEX S-1460, S-66.0 and n-eicosane
(ii) SHODEX S-1950, S-152 and n-tetracontane
(iii) SHODEX S-3900, S-565, S-5.05
(iv) SHODEX S-7500, S-1010, S-28.5

The vial containing the solution of the monodisperse polystyrene standard sample dissolved for 2 hours with the high-temperature shaking device ("SSC-9300" manufactured by Senshu Scientific Co., Ltd.) at a temperature of 150°C, was installed in the above device (ALLIANCE GPCV2000 manufactured by Nihon Waters K.K.) GPC measurement was carried out with the detector (the refractive index detector with built-in GPCV2000) to record a chromatogram (a data set about the retention time of the polystyrene standard sample and the response of the refractive index detector) at a sampling interval of 1 s. The retention time (peak top) of the polystyrene standard sample was read from the thus-obtained chromatogram and plotted with respect to the logarithmic value of the molecular weight of the polystyrene standard sample. The molecular weight of the n-eicosane and that of the n-tetracontane were determined as 600 and 1,200, respectively. A non-liner least squares method was applied to the resulting plot to obtain a quartic curve. The quartic curve was used as a calibration curve.

· Calculation of molecular weight (M)

On the sample dissolved for 2 hours with the high-temperature shaking device ("SSC-9300" manufactured by Senshu Scientific Co., Ltd.) at a temperature of 150°C, GPC measurement was carried out in the same conditions as the above-described monodisperse polystyrene standard samples to record a chromatogram at a sampling interval of 1 s. Using this chromatogram, the differential molecular weight distribution curve and the average molecular weight (Mz) of the sample were calculated by the method described in Chapter 4 on pages 51-60 of "Size Exclusion Chromatography" by Sadao Mori (Kyoritsu Shuppan). To correct the molecular weight dependence of dn/dc, the height H from the baseline of the chromatogram was corrected by the following formula:

$$H' = H / [1.032 + 189.2 / M\ (PE)]$$

The following formula was used to convert the molecular weight of polystyrene to that of polyethylene:

$$M\ (PE) = 0.468 \times M\ (PS)$$

· Measurement temperature: 145°C
· Concentration: 20 mg/10 mL
· Injected amount: 0.3 ml
· Solvent: Ortho-dichlorobenzene
· Flow rate: 1.0 ml/min

[Tensile test]

A 1 mm-thick sheet was produced from the base resin or ionomer of each example or comparative example by the method (cooling method A) described in JIS K 7151:1995. The sheet was cut to produce a type 5B small sample

described in JIS K 7162:1994. Using the sample, a tensile test was carried out according to JIS K 7161:2014 at a temperature of 23°C to measure the tensile modulus (MPa), tensile fracture stress (MPa) and tensile fracture elongation (%) of the sample. The testing rate was set to 10 mm/min.

[Tensile impact strength]

1) Method for producing tensile impact strength test sample

A resin pellet was produced by use of the base resin or ionomer of each example or comparative example. The resin pellet was put in a mold for heating press having a thickness of 1 mm and pre-heated for 5 minutes in a heat pressing device with a surface temperature of 180°C. Then, pressurization and depressurization were repeatedly carried out on the resin pellet to dissolve the resin and deaerate residual gas in the melted resin. In addition, pressurization at 4.9 MPa was carried out on the resin pellet and kept for 5 minutes.
Then, with applying a pressure of 4.9 MPa, the resin pellet was gradually cooled down at a rate of 10°C/min. When the temperature was decreased to around room temperature, a molded plate was taken out from the mold.
The obtained molded plate was conditioned for at least 48 hours at a temperature of 23°C ± 2°C and a humidity of 50°C ± 5°C.
The conditioned pressed plate was cut to produce a sample in the shape of ASTM D1822 Type-S. The sample was used as a tensile impact strength test sample.

2) Tensile impact strength test conditions

The tensile impact strength ($kJ/m^2$) of the test sample was measured according to the method B defined in JIS K 7160:1996.
The only difference from JIS K 7160:1996 is the shape of the test sample.
For other measurement conditions, etc., the test was carried out by the method defined in JIS K 7160:1996.

[Phase angle δ at which absolute value G* of complex modulus is 0.1 MPa (G* = 0.1 MPa)]

The sample was put in a mold for heating press having a thickness of 1.0 mm and pre-heated for 5 minutes in the heat pressing device with a surface temperature of 180°C. Then, pressurization and depressurization were repeatedly carried out on the sample to deaerate residual gas in the melted resin. In addition, pressurization at 4.9 MPa was carried out on the sample and kept for 5 minutes. Then, the sample was transferred to a pressing device with a surface temperature of 25°C and kept at a pressure of 4.9 MPa for 3 minutes to cool down, thereby producing a pressed plate composed of the sample with a thickness of about 1.0 mm. The pressed plate composed of the sample was formed into a circle with a diameter of 25 mm and used as a sample. Using an ARES-type rotational rheometer (manufactured by Rheometrics) as a dynamic viscoelasticity measuring device, the dynamic viscoelasticity of the sample was measured under a nitrogen atmosphere in the following conditions.

· Plate: Parallel plate (diameter 25 mm)
· Temperature: 160°C
· Distortion amount: 10%
· Measurement angular frequency range: $1.0 \times 10^{-2}$ rad/s to $1.0 \times 10^{2}$ rad/s
· Measurement interval: 5 Points/decade

The phase angle δ was plotted with respect to the common logarithm log G* of the absolute value G* (Pa) of the complex modulus. The value of δ (degree) of a point corresponding to log G* = 5.0 was set as δ (G* = 0.1 MPa). In a case where there is no point corresponding to log G* = 5.0 in the measurement points, using two points around log G* = 5.0, the δ value at log G* = 5.0 was obtained by linear interpolation. When all the measured points corresponded to log G* < 5, using the values of three points with larger log G* values, the δ value at log G* = 5.0 in a quadratic curve, was obtained by extrapolation.

[Synthesis of ligand]

In accordance with the synthesis example described in JP-A No. 2013-043871, the following 2-bis(2,6-dimethoxyphenyl)phosphano-6-pentafluorophenylphenol ligand (B-27DM) was synthesized.

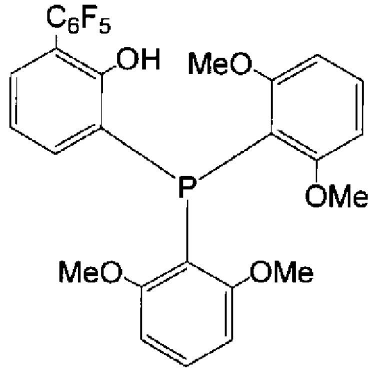

B-27 DM

[Synthesis of metal complex]

Then, in accordance with "Examples" in WO2010/050256, using bis-1,5-cyclooctadienenickel(0) (hereinafter referred to as $Ni(COD)_2$), a nickel complex (a B-27DM/Ni catalyst) in which B-27DM and $Ni(COD)_2$ were reacted at 1:1, was synthesized.

(Comparative Example 1)

· Binary copolymerization (E/isp) of ethylene/isoprene (isp)

As materials, dry toluene (1.0 L), 37 mg (0.1 mmol) of tri-n-octylaluminium (TNOA) and 2.0 mL (20 mmol) of isoprene (isp) were put in an autoclave (inner volume 2.4 L) furnished with stirring blades.

With mixing the materials, the temperature of the autoclave was increased to 90°C. Nitrogen was supplied until the pressure inside the autoclave reached 0.5 MPa. Then, ethylene was supplied to the autoclave, and the pressure was controlled to 2.5 MPa, thereby obtaining a mixture.

After the end of the control, 1.4 ml (28 μmol) of the B-27DM/Ni catalyst was injected into the autoclave using nitrogen to initiate the copolymerization of the mixture.

The mixture was polymerized for 60 minutes, cooled down, and then depressurized to terminate the reaction, thereby obtaining a reaction solution.

The reaction solution was put in acetone (1 L) to precipitate a polymer. Then, the polymer was filtered, washed and then collected. The collected polymer was dried under reduced pressure until it reached a constant weight, thereby obtaining a binary copolymer of ethylene/isoprene. The results are shown in Tables 1 and 2.

(Comparative Example 2)

· Binary copolymerization (E/AAc) of ethylene/allyl acetate (AAc)

As materials, dry toluene (1.0 L), 37 mg (0.1 mmol) of tri-n-octylaluminium (TNOA) and 2.2 mL (20 mmol) of allyl acetate (AAc) were put in an autoclave (inner volume 2.4 L) furnished with stirring blades.

With mixing the materials, the temperature of the autoclave was increased to 90°C. Nitrogen was supplied until the pressure inside the autoclave reached 0.5 MPa. Then, ethylene was supplied to the autoclave, and the pressure was controlled to 3.0 MPa, thereby obtaining a mixture.

After the end of the control, 1.0 ml (20 μmol) of the B-27DM/Ni catalyst was injected into the autoclave using nitrogen to initiate the copolymerization of the mixture.

The mixture was polymerized for 180 minutes, cooled down, and then depressurized to terminate the reaction, thereby obtaining a reaction solution.

The reaction solution was put in acetone (1 L) to precipitate a polymer. Then, the polymer was filtered, washed and collected. The collected polymer was dried under reduced pressure until it reached a constant weight, thereby obtaining a binary copolymer of ethylene/allyl acetate. The results are shown in Tables 1 and 2.

(Comparative Example 3)

· Binary copolymerization (E/Hex) of ethylene/1-hexene (Hex)

As materials, dry toluene (0.9 L), 37 mg (0.1 mmol) of tri-n-octylaluminium (TNOA) and 125 mL (1000 mmol) of 1-hexene (Hex) were put in an autoclave (inner volume 2.4 L) furnished with stirring blades.

With mixing the materials, the temperature of the autoclave was increased to 70°C. Nitrogen was supplied until the pressure inside the autoclave reached 0.5 MPa. Then, ethylene was supplied to the autoclave, and the pressure was controlled to 3.5 MPa, thereby obtaining a mixture.

After the end of the control, 0.025 ml (0.5 μmol) of the B-27DM/Ni catalyst was injected into the autoclave using nitrogen to initiate the copolymerization of the mixture.

The mixture was polymerized for 60 minutes, cooled down, and then depressurized to terminate the reaction, thereby obtaining a reaction solution.

The reaction solution was put in acetone (1 L) to precipitate a polymer. Then, the polymer was filtered, washed and then collected. The collected polymer was dried under reduced pressure until it reached a constant weight, thereby obtaining a binary copolymer of ethylene/1-hexene. The results are shown in Tables 1 and 2.

(Comparative Example 4)

· Binary copolymerization (E/NB) of ethylene/2-norbornene (NB)

As materials, dry toluene (1.0 L), 37 mg (0.1 mmol) of tri-n-octylaluminium (TNOA) and 1.9 g (20 mmol) of 2-norbornene (NB) were put in an autoclave (inner volume 2.4 L) furnished with stirring blades.

With mixing the materials, the temperature of the autoclave was increased to 90°C. Nitrogen was supplied until the pressure inside the autoclave reached 0.5 MPa. Then, ethylene was supplied to the autoclave, and the pressure was controlled to 3.0 MPa, thereby obtaining a mixture.

After the end of the control, 0.5 ml (10 μmol) of the B-27DM/Ni catalyst was injected into the autoclave using nitrogen to initiate the copolymerization of the mixture.

The mixture was polymerized for 60 minutes, cooled down, and then depressurized to terminate the reaction, thereby obtaining a reaction solution.

The reaction solution was put in acetone (1 L) to precipitate a polymer. Then, the polymer was filtered, washed and then collected. The collected polymer was dried under reduced pressure until it reached a constant weight, thereby obtaining a binary copolymer of ethylene/2-norbornene. The results are shown in Tables 1 and 2.

Table 1

| | Comonomer | Polymerization temperature (°C) | Ethylene partial pressure (MPa) | Comonomer concentration (mmol/L) | Toluene (L) | Catalyst amount (μmol) | Polymerization time (min) |
|---|---|---|---|---|---|---|---|
| Comparative Example 1 | Isoprene | 90 | 2.0 | 20 | 1.0 | 28 | 60 |
| Comparative Example 2 | Allyl acetate | 90 | 2.5 | 20 | 1.0 | 20 | 180 |
| Comparative Example 3 | 1-Hexene | 70 | 3.0 | 1000 | 0.9 | 0.5 | 60 |
| Comparative Example 4 | 2-Norbornene | 90 | 2.5 | 20 | 1.0 | 10 | 60 |
| Polymerization condition<br>Catalysts: B27DM/Ni, TNOA (0.1 mmol) | | | | | | | |

Table 2

| | Comonomer | Yield (g) | Vp activity (kg/mol ·h) | DSC | | Crystallinity (%) | GPC | |
|---|---|---|---|---|---|---|---|---|
| | | | | Tm (°C) | ΔH (mJ/mg) | | Mw | Mw/Mn |
| Comparative Example 1 | Isoprene | 13.7 | 489 | 132.0 | 184 | 63 | 107,000 | 2.0 |
| Comparative Example 2 | Allyl acetate | 5.0 | 83 | 132.4 | 220 | 75 | 34,000 | 2.0 |
| Comparative Example 3 | 1-Hexene | 6.7 | 13400 | 128.2 | 157 | 54 | 247,000 | 2.3 |
| Comparative Example 4 | 2-Norbornene | 66.1 | 6610 | 127.2 | 154 | 53 | 132,000 | 2.2 |

According to Table 2, it is clear that the copolymer obtained by use of the comonomer of Comparative Example 4 (2-norbornene) is a copolymer showing low crystallinity compared to Comparative Examples 1 and 2 and having a relatively high molecular weight (Mw).

As shown in Table 1, the monomer of Comparative Example 3 (1-hexene) cannot decrease the crystallinity until the initial comonomer concentration is increased up to 50 times with respect to Comparative Example 4.

That is, it is clear that compared to the comonomers of Comparative Examples 1 to 3, the copolymer of Comparative Example 4 efficiently decreases the crystallinity, and the molecular weight (Mw) of the polymer is high.

(Example 1)

· Ternary copolymerization (E/tBA/NB) of ethylene/t-butyl acrylate (tBA)/2-norbornene (NB)

As materials, dry toluene (1.0 L), 55 mg (0.15 mmol) of tri-n-octylaluminium (TNOA), 9.8 ml (67 mmol) of t-butyl acrylate (tBA) and 4.9 g (52 mmol) of 2-norbornene (NB) were put in an autoclave (inner volume 2.4 L) furnished with stirring blades.

With mixing the materials, the temperature of the autoclave was increased to 80°C. Nitrogen was supplied until the pressure inside the autoclave reached 0.2 MPa. Then, ethylene was supplied to the autoclave, and the pressure was controlled to 1.0 MPa, thereby obtaining a mixture.

After the end of the control, 25 ml (500 μmol) of the B-27DM/Ni catalyst was injected into the autoclave using nitrogen to initiate the copolymerization of the mixture. Also, ethylene was supplied to the autoclave to ensure that the pressure inside the autoclave was maintained, and tBA and NB were supplied to the autoclave at the following mol ratio: ethylene:tBA:NB = 92.7:6.1:1.2.

The mixture was polymerized for 33 minutes, cooled down, and then depressurized to terminate the reaction, thereby obtaining a reaction solution.

The reaction solution was put in acetone (1 L) to precipitate a polymer. Then, the polymer was filtered, washed and then collected. The collected polymer was dried under reduced pressure until it reached a constant weight, thereby obtaining an E/tBA/NB resin 1.

[Production of ionomer]

1) Production of base resin (E/AA/NB) of ionomer

First, 40 g of the E/tBA/NB resin 1, 0.8 g of p-toluenesulfonic acid monohydrate and 0.4 g of IRGANOX B225 (product name) as an antioxidant, were put in LABO PLASTOMILL: ROLLER MIXER R60 (product name, manufactured by Toyo Seiki Seisaku-sho, Ltd.) furnished with a small mixer (capacity 60 ml) . They were kneaded for 3 minutes at 160°C and 40 rpm to obtain an E/AA/NB resin.

An IR spectrum of the obtained E/AA/NB resin showed that peaks around 1730 $cm^{-1}$ disappeared, which are peaks derived from the carbonyl group of ester, and peak around 1700 $cm^{-1}$ increased, which are peaks derived from the carbonyl group of carboxylic acid (a dimer).

As a result, t-butyl ester decomposition and carboxylic acid formation in the E/tBA/NB resin 1 were confirmed.

2) Production of E/AA/NB-based ionomer

First, 40 g of the E/AA/NB resin, which is an esterolysis product of the E/tBA/NB, was put in LABO PLASTOMILL: ROLLER MIXER R60 (product name, manufactured by Toyo Seiki Seisaku-sho, Ltd.) furnished with a small mixer (capacity 60 ml), kneaded for 3 minutes at 160°C and 40 rpm and dissolved. Then, the rotational frequency was decreased to 20 rpm, and a sodium carbonate aqueous solution was dropwise added thereto until a desired neutralization degree was obtained. After the end of the addition, they were kneaded for 5 minutes at 250°C and 40 rpm, thereby obtaining an ionomer.

An IR spectrum of the ionomer showed that peaks around 1700 $cm^{-1}$ decreased, which are peaks derived from the carbonyl group of carboxylic acid (a dimer), and peaks around 1560 $cm^{-1}$ increased, which are peaks derived from the carbonyl group of the carboxylic acid salt group. From the amount of the decrease in the peaks around 1700 $cm^{-1}$, which are peaks derived from the carbonyl group of carboxylic acid (a dimer), it was confirmed that an ionomer with a desired neutralization degree was produced. The results are shown in Tables 3 to 5.

(Example 2)

· Ternary copolymerization (E/tBA/NB) of ethylene/t-butyl acrylate (tBA)/2-norbornene (NB)

An E/tBA/NB resin 2 was obtained by copolymerization with ethylene in the same manner as Example 1, except the following: the 2-norbornene (NB) amount was changed to 13 g (138 mmol); the B-27DM/Ni catalyst amount was changed to 30 ml (600 pmol); and the polymerization time was changed to 32 minutes.

[Production of ionomer]

· Production of E/AA/NB-based ionomer

An ionomer was produced in the same manner as Example 1, except that the E/tBA/NB resin 2 was used. The results are shown in Tables 3 to 5.

(Example 3)

· Ternary copolymerization (E/tBA/TCD) of ethylene/t-butyl acrylate (tBA)/tetracyclo[6.2.1.1$^{3,6}$.0$^{2,7}$]dodeca-4-en (TCD)

An E/tBA/TCD resin 3 was obtained by copolymerization with ethylene in the same manner as Example 1, except the following: 22 mL (138 mmol) of TCD was used in place of 2-norbornene; the B-27DM/Ni catalyst amount was changed to 30 ml (600 μmol); and the polymerization time was changed to 30 minutes. Then, the above-described "Production of ionomer" was not carried out. The results are shown in Tables 3 and 4.

(Comparative Example 5)

• Binary copolymerization (E/tBA) of ethylene/t-butyl acrylate (tBA)

An E/tBA resin 4 was obtained by copolymerization with ethylene in the same manner as Example 1, except the following: 2-norbornene was not used; the t-butyl acrylate (tBA) amount was changed to 8.2 mL (56 mmol); the B-27DM/Ni catalyst amount was changed to 10 ml (200 μmol); and the polymerization time was changed to 80 minutes.

[Production of ionomer]

· Production of E/AA-based ionomer

An ionomer was produced in the same manner as Example 1, except that the E/tBA resin 4 was used. The results are shown in Tables 3 to 5.

Table 3

| | Comonomer 1 | Comonomer 2 | Comonomer 1 concentration (mmol/L) | Comonomer 2 concentration (mmol/L) | Polymerization temperature (°C) | Catalyst amount (μmol) | Polymerization time (min) |
|---|---|---|---|---|---|---|---|
| Example 1 | t-Butyl acrylate | 2-Norbornene | 67 | 52 | 80 | 500 | 33 |
| Example 2 | t-Butyl acrylate | 2-Norbornene | 67 | 138 | 80 | 600 | 32 |
| Example 3 | t-Butyl acrylate | TCD | 67 | 138 | 80 | 600 | 30 |
| Comparative Example 5 | t-Butyl acrylate | - | 56 | - | 80 | 200 | 80 |

Polymerization conditions
Catalysts: B27DM/Ni, Toluene (1000 mL), TNOA (0.15 mmol)
Nitrogen partial pressure: 0.2 MPa
Ethylene partial pressure: 0.8 MPa

Table 4

| | Yield (g) | Vp activity (kg/mol·h) | DSC | | Crystallinity (%) | NMR | | | GPC | |
|---|---|---|---|---|---|---|---|---|---|---|
| | | | Tm (°C) | ΔH (mJ/mg) | | Content of comonomer 1 (mol %) | Content of comonomer 2 (mol %) | Number of methyl branches (Number/1000C) | Mw | Mw/Mn |
| Example 1 | 13.4 | 49 | 86.8 | 55.2 | 19 | 6.1 | 1.2 | 0.4 | 26,000 | 1.8 |
| Example 2 | 12.6 | 39 | 78.6 | 38.1 | 13 | 5.9 | 2.7 | 0.2 | 25,000 | 1.7 |
| Example 3 | 1.8 | 6 | 70.1 | 24.7 | 8 | 8.0 | 1.3 | < 0.1 | 6,000 | 1.6 |
| Comparative Example 5 | 11.5 | 45 | 94.8 | 74.2 | 25 | 5.6 | - | 0.5 | 39,000 | 2.0 |

As shown in Table 4, it was revealed that compared to the ethylene-t-butyl acrylate binary copolymer of Comparative Example 5, the production results of the multi-component, polar group-containing olefin copolymers (raw material resins) of Examples 1 and 2 achieved a decrease in the crystallinity, without decreasing the yield (the Vp activity). Also, it was revealed that Example 3 efficiently achieved a decrease in the crystallinity, although the type of the non-polar cyclic olefin was changed from 2-norbornene to tetracyclododecene (tetracyclo[6.2.1.1$^{3,6}$.0$^{2,7}$]dodeca-4-en). The unit of the number of methyl branches shown in Table 4, that is, "Number/1000C" means the number of methyl branches per 1,000 carbon atoms, and "C" shown in the unit means carbon atoms. For the unit, the same applies to Table 7 shown below.

Table 5

| | Raw material resin | Resin composition A/B/C (mol/mol/mol) | Neutralization degree (mol %) | MFR (g/10 min) | Tensile modulus (MPa) | Tensile impact strength (kJ/m$^2$) | Crystallinity (%) |
|---|---|---|---|---|---|---|---|
| Example 1 | Resin 1 | E/AA/NB = 92.7/6.1/1.2 | 58 | 0.8 | 194 | 988 | 9 |
| Example 2 | Resin 2 | E/AA/NB = 91.4/5.9/2.7 | 62 | 0.9 | 153 | 1203 | 7 |
| Comparative Example 5 | Resin 4 | E/AA = 94.4/5.6 | 60 | 1.8 | 260 | 772 | 12 |

As shown in Table 5, Examples 1 and 2 have a tensile modulus of from 153 MPa to 194 MPa, and they have desired rigidity; Examples 1 and 2 have a tensile impact strength of from 988 kJ/m$^2$ to 1203 kJ/m$^2$, and they have higher toughness than Comparative Example 5; and Examples 1 and 2 have a crystallinity of from 7% to 9%, which is lower than the crystallinity (12%) of Comparative Example 5, and they have superior transparency.

Accordingly, it was revealed that Examples 1 and 2 are each an ethylene-based ionomer based on the multi-component, polar group-containing olefin copolymer produced in the presence of the transition metal catalyst, and compared to the ethylene-based ionomer of Comparative Example 5, in which the binary polar group-containing olefin copolymer produced at a similar neutralization degree and in the presence of the same transition metal catalyst was used as the raw material resin, Examples 1 and 2 are well-balanced between rigidity (tensile modulus) and toughness (tensile impact strength) and achieve a decrease in crystallinity and superior transparency.

(Example 4)

· Ternary copolymerization (E/tBA/NB) of ethylene/t-butyl acrylate (tBA)/2-norbornene (NB)

As materials, dry toluene (1000 L), 82 g (0.22 mol) of tri-n-octylaluminium (TNOA), 7.2 kg (56 mol) of t-butyl acrylate (tBA) and 12 kg (127 mol) of 2-norbornene were put in an autoclave (inner volume 1.6 m$^3$) furnished with stirring blades.

With mixing the materials, the temperature of the autoclave was increased to 85°C. Then, ethylene was supplied to the autoclave, and the pressure inside the autoclave was controlled to 0.8 MPa, thereby obtaining a mixture.

After the end of the control, the B-27DM/Ni catalyst (250 mmol) was supplied to the autoclave to initiate the copolymerization of the mixture.

During the reaction, the temperature inside the autoclave was kept at 85°C, and the B-27DM/Ni catalyst (734 mmol) was supplied in several batches. Also, ethylene was supplied to the autoclave to ensure that the pressure inside the autoclave was maintained, and tBA and NB were supplied to the autoclave at the following mol ratio: ethylene:tBA:NB = 92.0:5.1:2.9. After the mixture was polymerized for 338 minutes, the reaction was terminated, thereby obtaining an E/tBA/NB resin 5. The polymerization conditions of the resin 5 and the results of measuring the physical properties thereof, are shown in Tables 6 and 7.

[Production of base resin (E/AA/NB) of ionomer]

First, 40 g of the E/tBA/NB resin 5, 0.8 g of p-toluenesulfonic acid monohydrate, and 185 ml of toluene were put in a 500 ml separable flask and stirred at 105°C for 4 hours. Next, 185 ml of ion-exchanged water was added in the separable flask. The resulting solution in the flask was stirred and left to stand. Then, an aqueous layer thus formed was

removed from the flask. Then, the addition of ion-exchanged water in the separable flask and the removal of the aqueous layer from the separable flask, were repeated until the pH of the removed aqueous layer reached 5 or more. From the residual solution, the solvent was distilled under reduced pressure, and the resultant solution was dried until it reached a constant weight, thereby obtaining an E/AA/NB resin. The results of measuring the physical properties of the thus-obtained ionomer-based resin of Example 4, are shown in Table 8.

An IR spectrum of the E/AA/NB resin showed that peaks around 1730 $cm^{-1}$ disappeared, which are peaks derived from the carbonyl group of ester, and peaks around 1700 $cm^{-1}$ increased, which are peaks derived from the carbonyl group of carboxylic acid (a dimer).

As a result, t-butyl ester decomposition and carboxylic acid formation in the E/tBA/NB resin 5 were confirmed.

(Example 5)

[Production of ionomer]

Using the base resin (E/AA/NB) obtained in Example 4, an ionomer was produced by the following method.

1) Production of Na ion source

First, 22 g of an ethylene-methacrylic acid copolymer (product name: NUCREL N1050H, manufactured by: DuPont-Mitsui Polychemicals Co., Ltd.) and 18 g of sodium carbonate were put in a small mixer (capacity 60 ml) installed in LABO PLASTOMILL: ROLLER MIXER R60 (product name, manufactured by Toyo Seiki Seisaku-sho, Ltd.) They were kneaded for 3 minutes at 180°C and 40 rpm, thereby producing a Na ion source.

2) Production of Zn ion source

First, 21.8 g of an ethylene-methacrylic acid copolymer (product name: NUCREL N1050H, manufactured by DuPont-Mitsui Polychemicals Co., Ltd.), 18 g of zinc oxide and 0.2 g of zinc stearate were put in a small mixer (capacity 60 ml) installed in LABO PLASTOMILL: ROLLER MIXER R60 (product name, manufactured by Toyo Seiki Seisaku-sho, Ltd.) They were kneaded for 3 minutes at 180°C and 40 rpm, thereby producing a Zn ion source.

3) Production of E/AA/NB-based ionomer

First, 40 g of the E/AA/NB resin, which is an esterolysis product of the E/tBA/NB resin 5 obtained in Example 4, was put in a small mixer (capacity 60 ml) installed in LABO PLASTOMILL: ROLLER MIXER R60 (product name, manufactured by Toyo Seiki Seisaku-sho, Ltd.) The E/AA/NB resin was kneaded for 3 minutes at 160°C and 40 rpm and dissolved. Then, the Na ion source was added in the small mixer to give a neutralization degree of 20 mol %. They were kneaded for 5 minutes at 250°C and 40 rpm, thereby obtaining an ionomer.

An IR spectrum of the ionomer showed that peaks around 1700 $cm^{-1}$ decreased, which are peaks derived from the carbonyl group of carboxylic acid (a dimer), and peaks around 1560 $cm^{-1}$ increased, which are peaks derived from the carbonyl group of a carboxylic acid salt group. From the amount of the decrease in the peaks around 1700 $cm^{-1}$, which are peaks derived from the carbonyl group of carboxylic acid (a dimer), it was confirmed that an ionomer with a desired neutralization degree was produced. The results of measuring the physical properties of the ionomer of Example 5 are shown in Table 8. In Table 8, "ND" means "No Data".

(Examples 6 to 12)

[Production of ionomers]

Ionomers were produced in the same manner as Example 5, except that the ionomer base resin (E/AA/NB) obtained in Example 4 was used, and the Na or Zn ion source was added to give the neutralization degrees (mol %) shown in Table 8. The results of measuring the physical properties of the ionomers of Examples 6 to 12, are shown in Table 8.

(Example 13)

Ternary copolymerization (E/tBA/NB) of ethylene/t-butyl acrylate (tBA)/2-norbornene (NB)

An E/tBA/NB resin 6 at a mol ratio of ethylene:tBA:NB = 92.7:6.1:1.2, was obtained by copolymerization with

ethylene in the same manner as Example 1, except the following: the t-butyl acrylate (tBA) amount was changed to 12.4 ml (85 mmol); the 2-norbornene (NB) amount was changed to 4.5 g (48 mmol); the B-27DM/N1 catalyst amount was changed to 20 ml (400 pmol); the polymerization temperature was changed to 90°C; and the polymerization time was changed to 48 minutes. The polymerization conditions of the resin 6 and the results of measuring the physical properties thereof, are shown in Tables 6 and 7.

[Production of ionomer]

• Production of E/AA/NB-based ionomer

Using the E/tBA/NB resin 6, the base resin (E/AA/NB) of the ionomer of Example 13 was produced by the same method as described above in [Production of base resin (E/AA/NB) of ionomer] of Example 4.

Then, using the base resin of the ionomer of Example 13, an ionomer was produced in the same manner as Example 5, except that in the above-described "3) Production of E/AA/NB-based ionomer" of Example 5, the amount of the added Na ion source was changed to give the neutralization degree (mol %) shown in Table 8. The results of measuring the physical properties of the thus-obtained ionomer of Example 13 are shown in Table 8.

(Example 14)

· Ternary copolymerization (E/tBA/NB) of ethylene/t-butyl acrylate (tBA)/2-norbornene (NB)

As materials, 7.0 ml (48 mmol) of t-butyl acrylate (tBA) and 9.4 g (100 mmol) of 2-norbornene (NB) were put in an autoclave (inner volume 1.6 $m^3$) furnished with stirring blades.

With mixing the materials, the temperature of the autoclave was increased to 90°C. Then, ethylene was supplied to the autoclave, and the pressure inside the autoclave was controlled to 0.8 MPa, thereby obtaining a mixture.

After the end of the control, the B-27DM/Ni catalyst (240 mmol) was supplied to the autoclave to initiate the copolymerization of the mixture.

During the reaction, the temperature inside the autoclave was kept at 90°C, and the B-27DM/Ni catalyst (550 mmol) was supplied to the autoclave in several batches. Also, ethylene was supplied to the autoclave to ensure that the pressure inside the autoclave was maintained, and tBA and NB were intermittently supplied to the autoclave at the following mol ratio: ethylene:tBA:NB = 94.3:2.9:2.8. After the mixture was polymerized for 354 minutes, the reaction was terminated, thereby obtaining an E/tBA/NB resin 7. The polymerization conditions of the resin 7 and the results of measuring the physical properties thereof, are shown in Tables 6 and 7.

[Production of base resin (E/AA/NB) of ionomer]

Using the E/tBA/NB resin 7, the base resin (E/AA/NB) of the ionomer of Example 14 was produced by the same method as described above in [Production of base resin (E/AA/NB) of ionomer] of Example 4. The results of measuring the physical properties of the base resin of the ionomer of Example 14 are shown in Table 8.

(Example 15)

[Production of ionomer]

· Production of E/AA/NB-based ionomer

Using the base resin (E/AA/NB) of the ionomer obtained in Example 14, an ionomer was produced in the same manner as Example 5, except that in the above-described "3) Production of E/AA/NB-based ionomer" of Example 5, the amount of the added Na ion source was changed to give the neutralization degree (mol %) shown in Table 8. The results of measuring the physical properties of the thus-obtained ionomer of Example 15 are shown in Table 8.

(Comparative Example 6)

· Comparative raw material: Ethylene-methacrylic acid copolymer (E/MAA)

As a comparative raw material, a binary polar group-containing olefin copolymer (product name: NUCREL N1560, manufactured by: DuPont-Mitsui Polychemicals Co., Ltd.) was used, which is an ethylene-methacrylic acid copolymer produced by a high-pressure radical polymerization process. The results of measuring the physical properties

thereof are shown in Table 9.

(Comparative Example 7)

• Comparative raw material: Na ionomer

As a comparative raw material, an ionomer resin (product name: HIMILAN HIM1605, manufactured by: DuPont-Mitsui Polychemicals Co., Ltd.) was used, which is an ethylene-methacrylic acid-sodium methacrylate copolymer produced by a high-pressure radical polymerization process. The results of measuring the physical properties thereof are shown in Table 9.

(Comparative Example 8)

• Comparative raw material: Na ionomer

As a comparative raw material, an ionomer resin (product name: HIMILAN HIM1707, manufactured by: DuPont-Mitsui Polychemicals Co., Ltd.) was used, which is an ethylene-methacrylic acid-sodium methacrylate copolymer produced by a high-pressure radical polymerization process. The results of measuring the physical properties thereof are shown in Table 9.

(Comparative Example 9)

• Comparative raw material: Zn ionomer

As a comparative raw material, an ionomer resin (product name: HIMILAN HIM1706, manufactured by: DuPont-Mitsui Polychemicals Co., Ltd.) was used, which is an ethylene-methacrylic acid-zinc methacrylate copolymer produced by a high-pressure radical polymerization process. The results of measuring the physical properties thereof are shown in Table 9.

(Comparative Example 10)

• Binary copolymerization (E/tBA) of ethylene/t-butyl acrylate (tBA)

As materials, dry toluene (1000 L), 50 g (0.14 mol) of tri-n-octylaluminium (TNOA) and 6.3 kg (49 mol) t-butyl acrylate (tBA) were put in an autoclave (inner volume 1.6 $m^3$) furnished with stirring blades.

With mixing the materials, the temperature of the autoclave was increased to 100°C. Then, ethylene was supplied to the autoclave, and the pressure inside the autoclave was controlled to 0.8 MPa, thereby obtaining a mixture.

After the end of the control, the B-27DM/Ni catalyst (160 mmol) was supplied to the autoclave to initiate the copolymerization of the mixture.

During the reaction, the temperature inside the autoclave was kept at 100°C, and the B-27DM/Ni catalyst (224 mmol) was supplied to the autoclave in several batches. Also, ethylene was supplied to the autoclave to ensure that the pressure inside the autoclave was maintained, and tBA was supplied to the autoclave at the following mol ratio: ethylene:tBA = 94.4:5.6. After the mixture was polymerized for 240 minutes, the reaction was terminated, thereby obtaining an E/tBA resin 8. The polymerization conditions of the resin 8 and the results of measuring the physical properties thereof, are shown in Tables 6 and 7.

[Production of base resin (E/AA) of ionomer]

Using the E/tBA resin 8, the base resin (E/AA) of the ionomer of Comparative Example 10 was produced by the same method as described above in [Production of base resin (E/AA/NB) of ionomer] of Example 4. The results of measuring the physical properties of the base resin of the ionomer of Comparative Example 10 are shown in Table 9.

(Comparative Examples 11 and 12)

[Production of ionomers]

• Production of E/AA-based ionomers

Ionomers were produced in the same manner as Example 5, except that the base resin (E/AA) of the ionomer obtained in Comparative Example 10 was used, and in the above-described "3) Production of E/AA/NB-based ionomer" of Example 5, the amount of the added Na ion source was changed to give the neutralization degrees (mol %) shown in Table 9. The results of measuring the physical properties of the ionomers of Comparative Examples 11 and 12 are shown in Table 9.

Table 6

| | Comonomer 1 | Comonomer 2 | Comonomer 1 concentration (mmol/L) | Comonomer 2 concentration (mmol/L) | Polymerization temperature (°C) | Catalyst amount (μmol) | Polymerization time (min) |
|---|---|---|---|---|---|---|---|
| Resin 5 | t-Butyl acrylate | 2-Norbornene | 56 | 127 | 85 | 984,000 | 338 |
| Resin 6 | t-Butyl acrylate | 2-Norbornene | 85 | 48 | 90 | 400 | 48 |
| Resin 7 | t-Butyl acrylate | 2-Norbornene | 48 | 100 | 90 | 790,000 | 354 |
| Resin 8 | t-Butyl acrylate | - | 49 | - | 100 | 320,000 | 240 |

Table 7

| | Yield (g) | Vp activity (kg/mol·h) | DSC | | | NMR | | | GPC | |
|---|---|---|---|---|---|---|---|---|---|---|
| | | | Tm (°C) | ΔH (mJ/mg) | Crystallinity (%) | Content of comonomer 1 (mol %) | Content of comonomer 2 (mol %) | Number of methyl branches (Number/1000C) | Mw | Mw/Mn |
| Resin 5 | 115,000 | 21 | 80.5 | 42.9 | 15 | 5.1 | 2.9 | 0.5 | 35,000 | 2.3 |
| Resin 6 | 16.2 | 51 | 82.4 | 34.2 | 12 | 7.4 | 1.3 | 0.5 | 23,000 | 1.8 |
| Resin 7 | 102.1 | 22 | 92.8 | 69.4 | 24 | 2.9 | 2.8 | 0.8 | 39,000 | 1.9 |
| Resin 8 | 48,000 | 28 | 94.1 | 77.5 | 26 | 5.6 | - | 1.0 | 22,000 | 2.3 |

Table 8

| | Raw material resin | Resin composition A/B/C (mol/mol/mol) | Neutralization degree | | MFR 190 deg, 2.16 kg (g/10 min) | Tensile modulus (MPa) | Tensile fracture stress (MPa) | Tensile fracture elongation (%) | Tensile impact strength (kJ/m$^2$) | Crystallinity (%) | Melting point Tm (°C) | Phase angle δ (G' = 0.1 MPa) |
|---|---|---|---|---|---|---|---|---|---|---|---|---|
| | | | Na*/(M)AA (mol %) | 0.5Zn$^{2+}$/(M)AA (mol %) | | | | | | | | |
| Example 4 | Resin 5 | E/AA/NB = 92/5.1/2.9 | 0 | 0 | 17 | 88 | 41 | 477 | 764 | 20 | 84 | 62 |
| Example 5 | | E/AA/NB = 92/5.1/2.9 | 20 | - | 3.0 | 194 | 52 | 446 | 1160 | 18 | 86 | 63 |
| Example 6 | | E/AA/NB = 92/5.1/2.9 | 30 | - | 1.3 | 215 | 51 | 354 | 1301 | 15 | 85 | 61 |
| Example 7 | | E/AA/NB = 92/5.1/2.9 | 45 | - | 0.5 | 184 | 61 | 366 | 1282 | 10 | 82 | 61 |
| Example 8 | | E/AA/NB = 92/5.1/2.9 | 60 | - | 0.1 | 150 | 55 | 302 | 1425 | 7 | 81 | 58 |
| Example 9 | | E/AA/NB = 92/5.1/2.9 | - | 10 | 50 | 104 | 43 | 433 | 1020 | 18 | 85 | 61 |
| Example 10 | | E/AA/NB = 92/5.1/2.9 | - | 20 | 1.4 | 116 | 51 | 439 | 1400 | 13 | 84 | 58 |
| Example 11 | | E/AA/NB = 92/5.1/2.9 | - | 40 | 0.4 | 130 | 52 | 333 | 1436 | 12 | 84 | 51 |
| Example 12 | | E/AA/NB = 92/5.1/2.9 | - | 60 | No Flow | 140 | 33 | 164 | 856 | 8 | 79 | 52 |
| Example 13 | Resin 6 | E/AA/NB = 92.7/6.1/1.2 | 58 | - | 0.8 | 206 | 56 | 272 | 988 | 9 | 88 | ND |
| Example 14 | Resin 7 | E/AA/NB = 94.3/2.9/2.8 | 0 | 0 | ND | 96 | 39 | 500 | 1008 | 23 | 95 | ND |
| Example 15 | | E/AA/NB = 94.3/2.9/2.8 | 35 | - | 1.0 | 188 | 43 | 416 | 1231 | 24 | 94 | ND |

ND means "No Data".

Table 9

| | Raw material resin | Resin composition A/B (mol/mol) | Neutralization degree | | MFR 190 deg, 2.16 kg (g/10 min) | Tensile modulus (MPa) | Tensile fracture stress (MPa) | Tensile fracture elongation (%) | Tensile impact strength (kJ/$m^2$) | Crystallinity (%) | Melting point Tm (°C) | Phase angle δ (G' = 0.1 MPa) |
|---|---|---|---|---|---|---|---|---|---|---|---|---|
| | | | Na*/(M)AA (mol %) | 0.5Zn*/(M)AA (mol %) | | | | | | | | |
| Comparative Example 6 | - | E/MAA = 94.6/5.4 | 0 | 0 | 53 | 59 | 24 | 370 | 379 | 20 | 89 | 48 |
| Comparative Example 7 | - | E/MAA = 94.6/5.4 | 30 | - | 2.8 | 250 | 40 | 350 | 623 | 18 | 91 | 46 |
| Comparative Example 8 | - | E/MAA = 94.6/5.4 | 54 | - | 0.9 | 233 | 40 | 277 | 707 | 10 | 86 | 47 |
| Comparative Example 9 | - | E/MAA = 94.6/5.4 | - | 59 | 0.9 | 199 | 41 | 272 | 673 | 14 | 87 | 45 |
| Comparative Example 10 | Resin 8 | E/AA = 94.4/5.6 | 0 | 0 | 128 | 301 | 15 | 179 | 120 | 33 | 100 | 52 |
| Comparative Example 11 | | E/AA = 94.4/5.6 | 30 | - | 15 | 515 | 22 | 198 | 153 | 32 | 101 | 62 |
| Comparative Example 12 | | E/AA = 94.4/5.6 | 60 | - | 1.8 | 260 | 36 | 217 | 772 | 12 | 97 | 54 |

FIG. 1 is a view showing a relationship between the neutralization degree and crystallinity of the base resins or ionomers of Examples 4 to 15 and Comparative Examples 6 to 12, and

FIG. 2 is a view showing a relationship (balance) between the tensile modulus (rigidity) and tensile impact strength (toughness) of the base resins or ionomers of Examples 4 to 15 and Comparative Examples 6 to 12.

[Comparison between base resins]

As a result of comparing the base resin of Examples 4 shown in Table 8 and the base resin of Comparative Example 6 shown in Table 9, their crystallinities are both 20%. However, Example 4 is higher in tensile modulus, tensile fracture stress, tensile fracture elongation and tensile impact strength than Comparative Example 6. Accordingly, Example 4 is relatively better in balance between rigidity, toughness and transparency than Comparative Example 6, and Example 4 is also better in tensile fracture stress and tensile fracture elongation.

In the case of comparing the base resin of Example 14 and the base resin of Comparative Example 6, the crystallinity of Example 14 is 23% and higher than Comparative Example 6. However, as with Example 4, Example 14 is higher in tensile modulus, tensile fracture stress, tensile fracture elongation and tensile impact strength than Comparative Example 6. Accordingly, Example 14 is relatively better in balance between rigidity, toughness and transparency than Comparative Example 6, and Example 14 is also better in tensile fracture stress and tensile fracture elongation.

As a result of comparing the base resin of Example 4 and the base resin of Comparative Example 10, the tensile modulus of Comparative Example 10 is higher than Example 4. However, Example 4 has the desired rigidity (tensile modulus) and Example 4 is higher in tensile fracture stress, tensile fracture elongation and tensile impact strength and lower in crystallinity than Comparative Example 10. Accordingly, Example 4 is relatively better in balance between rigidity, toughness and transparency than Comparative Example 10, and Example 4 is also better in tensile fracture stress and tensile fracture elongation.

In the present invention, the desired tensile modulus is at least 88 MPa.

Also in the case of comparing the base resin of Example 14 and the base resin of Comparative Example 10, as with the case of comparing the base resin of Example 4 and the base resin of Comparative Example 10, Example 14 is better in balance between rigidity, toughness and transparency than Comparative Example 10, and Example 14 is also better in tensile fracture stress and tensile fracture elongation.

[Comparison between ionomers]

1) Na ionomers

First, the Na ionomers containing the Na ion as the metal ion, will be compared.

As a result of comparing the ionomers of Example 6 and Comparative Example 7, both of which have a neutralization degree of 30 mol %, the tensile modulus of Comparative Example 7 is higher than Example 6. However, Example 6 has the desired rigidity (tensile modulus), and Example 6 is higher in tensile fracture stress, tensile fracture elongation and tensile impact strength and is lower in crystallinity than Comparative Example 7. Accordingly, Example 6 is relatively better in balance between rigidity, toughness and transparency than Comparative Example 7, and Example 6 is also better in tensile fracture stress and tensile fracture elongation.

Also in the case of comparing the ionomers of Example 6 and Comparative Example 11, both of which have a neutralization degree of 30 mol %, as with the case of comparing the ionomers of Example 6 and Comparative Example 7, Example 6 is relatively better in balance between rigidity, toughness and transparency than Comparative Example 11, and Example 6 is also better in tensile fracture stress and tensile fracture elongation.

It is clear that as with Example 6, Examples 5, 7, 8, 13 and 15, which are examples other than Example 6, are also better in balance between rigidity, toughness and transparency, and they are also better in tensile fracture stress and tensile fracture elongation.

2) Zn ionomers

Next, the Zn ionomers containing the Zn ion as the metal ion, will be compared.

As the ionomers with similar neutralization degrees, the ionomer of Example 12 with a neutralization degree of 60 mol % and the ionomer of Comparative Example 9 with a neutralization degree of 59 mol %, will be compared. The tensile modulus of Comparative Example 9 is higher than Example 12. However, Example 12 has the desired rigidity (tensile modulus), and Example 12 is higher in tensile impact strength than Comparative Example 9 and is lower in crystallinity. Accordingly, Example 12 is relatively better in balance between rigidity, toughness and transparency than Comparative Example 9, and Example 12 has the desired tensile fracture stress and tensile fracture elongation.

From the results of the base resin of Example 4 and the ionomer of Example 12, Examples 9 to 11, which are

examples other than Example 12, are estimated as follows: in the case of comparing Examples 9 to 11 to conventional Zn ionomers with similar neutralization degrees, Examples 9 to 11 are better in balance between rigidity, toughness and transparency than the conventional Zn ionomers, and they have the desired tensile fracture stress and tensile fracture elongation.

3) Neutralization degree

From the results of Examples 4 to 15, it was proved that when the neutralization degree is in a range of from 0 mol % to 60 mol %, the multi-component, polar group-containing olefin copolymer better in balance between rigidity, toughness and transparency, is obtained.

4) Metal ion species

Also from the results of Examples 4 to 15, it was proved that the ionomer which contains, in the base resin, the Na or Zn ion as the metal ion and which meets the conditions of the present application, is better in balance between rigidity, toughness and transparency. Accordingly, it is estimated that even in the case of an ionomer containing a metal ion species other than Na ion and Zn ion, similar effects are obtained if the ionomer meets the conditions of the present application.

According to FIGS. 1 and 2 and Tables 8 and 9, therefore, the base resins and ionomers of Examples 4 to 15, each of which is the multi-component, polar group-containing olefin copolymer of the specific composition of the present invention, demonstrate that Examples 4 to 15 are far better in balance between rigidity (tensile modulus) and toughness (tensile impact strength) than the base resins and ionomers of Comparative Examples 6 to 9, each of which is the existing polar group-containing olefin copolymer with a similar acid content and a similar neutralization degree, and Examples 4 to 15 have the desired tensile fracture stress and tensile fracture elongation.

Also, the base resins and ionomers of Examples 4 to 15, each of which is the ternary polar group-containing olefin copolymer, demonstrate that Examples 4 to 15 are better in balance between rigidity (tensile modulus) and toughness (tensile impact strength) than the base resins and ionomers of Comparative Examples 10 to 12, each of which is the binary polar group-containing olefin copolymer with a similar acid content and a similar neutralization degree; Examples 4 to 15 have the desired tensile fracture stress and tensile fracture elongation; and Examples 4 to 15 are lower in crystallinity at the similar neutralization degrees and better in transparency.

Industrial Applicability

The multi-component, polar group-containing olefin copolymer of the present invention is better in balance between transparency (crystallinity), rigidity (tensile modulus) and toughness (tensile impact strength) than conventional bipolymers.

## Claims

**1.** A multi-component, polar group-containing olefin copolymer comprising:

at least one structural unit (A) selected from the group consisting of a structural unit derived from ethylene and a structural unit derived from an α-olefin which contains 3 to 20 carbon atoms,
a structural unit (B) derived from a polar group-containing olefin monomer represented by the following general formula (1), and
a structural unit (C) derived from a non-polar cyclic olefin represented by the following general formula (2),
wherein a phase angle δ at which an absolute value G* of a complex modulus measured with a rotational rheometer is 0.1 MPa (G* = 0.1 MPa) is from 50 degrees to 75 degrees, as determined according to the method disclosed in the description, and
wherein a number of methyl branches calculated by $^{13}C$-NMR is 5 or less per 1,000 carbon atoms,
wherein a content of the structural unit (C) derived from the non-polar cyclic olefin is from 0.1 mol % to 20 mol %, and
wherein a content of the structural unit (B) derived from the polar group-containing olefin monomer is from 2 mol % to 20 mol %:

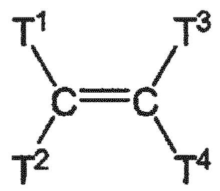

General Formula (1)

where $T^1$ to $T^3$ are each independently a substituent selected from the group consisting of a hydrogen atom, a hydrocarbon group which contains 1 to 20 carbon atoms, a silyl group which contains a carbon skeleton having 1 to 18 carbon atoms, an alkoxy group which contains 1 to 20 carbon atoms, a halogen atom and a cyano group; $T^4$ is a substituent selected from the group consisting of:

an ester group which contains 2 to 30 carbon atoms, a carboxyl group, a carboxylic acid salt group,
an alkoxycarbonyl group which contains 2 to 30 carbon atoms and in which part of a carbon skeleton is substituted with at least one substituent selected from the group consisting of an ester group, a carboxyl group and a carboxylic acid salt group,
a hydrocarbon group which contains 2 to 20 carbon atoms and in which part of a carbon skeleton is substituted with at least one substituent selected from the group consisting of an ester group, a carboxyl group and a carboxylic acid salt group,
an alkoxy group which contains 1 to 20 carbon atoms and in which part of a carbon skeleton is substituted with at least one substituent selected from the group consisting of an ester group, a carboxyl group and a carboxylic acid salt group,
an acyloxy group which contains 2 to 20 carbon atoms and in which part of a carbon skeleton is substituted with at least one substituent selected from the group consisting of an ester group, a carboxyl group and a carboxylic acid salt group,
a substituted amino group which contains 1 to 12 carbon atoms and in which part of a carbon skeleton is substituted with at least one substituent selected from the group consisting of an ester group, a carboxyl group and a carboxylic acid salt group, and
a substituted silyl group which contains 1 to 18 carbon atoms and in which part of a carbon skeleton is substituted with at least one substituent selected from the group consisting of an ester group, a carboxyl group and a carboxylic acid salt group;
the carboxylic acid salt group is a carboxylic acid salt group which contains a metal ion of Group 1, 2 or 12 of the periodic table; and
$T^1$, $T^2$, $T^3$ and $T^4$ are optionally bound to form a ring,

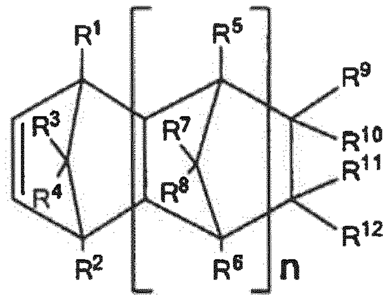

General Formula (2)

where $R^1$ to $R^{12}$ are each optionally the same or different and are each selected from the group consisting of a hydrogen atom, a halogen atom and a hydrocarbon group which contains 1 to 20 carbon atoms;
$R^9$ and $R^{10}$ are optionally integrated to form a divalent organic group, and $R^{11}$ and $R^{12}$ are optionally integrated to form a divalent organic group; $R^9$ or $R^{10}$ optionally forms a ring with $R^{11}$ or $R^{12}$; and
n is 0 or a positive integer, and when n is 2 or more, $R^5$ to $R^8$ are each optionally the same or different in each repeating unit.

2. The multi-component, polar group-containing olefin copolymer according to Claim 1, wherein $T^4$ is a substituent

selected from the group consisting of:

an ester group which contains 2 to 30 carbon atoms, a carboxyl group, a carboxylic acid salt group,
an alkoxycarbonyl group which contains 2 to 30 carbon atoms and in which part of a carbon skeleton is substituted with at least one substituent selected from the group consisting of an ester group, a carboxyl group and a carboxylic acid salt group, and
a hydrocarbon group which contains 2 to 20 carbon atoms and in which part of a carbon skeleton is substituted with at least one substituent selected from the group consisting of an ester group, a carboxyl group and a carboxylic acid salt group.

**3.** The multi-component, polar group-containing olefin copolymer according to Claim 1 or 2, wherein $T^4$ is an ester group which contains 2 to 30 carbon atoms, a carboxyl group or a carboxylic acid salt group.

**4.** The multi-component, polar group-containing olefin copolymer according to any one of Claims 1 to 3, wherein $T^4$ is a carboxyl group or a carboxylic acid salt group.

**5.** The multi-component, polar group-containing olefin copolymer according to any one of Claims 1 to 4, wherein $T^1$ and $T^2$ are each a hydrogen atom, and $T^3$ is a hydrogen atom or a methyl group.

**6.** The multi-component, polar group-containing olefin copolymer according to any one of Claims 1 to 5, wherein a weight average molecular weight / a number average molecular weight (Mw/Mn) measured by gel permeation chromatography is 1.5 or more and 4.0 or less.

**7.** The multi-component, polar group-containing olefin copolymer according to any one of Claims 1 to 6, wherein a melting point (Tm) (°C) observed by differential scanning calorimetry and a total content [Z] (mol %) of the structural unit (B) and the structural unit (C) satisfy the following formula (I):

$$\text{Formula (I): } 50 < Tm < -3.74 \times [Z] + 130$$

**8.** The multi-component, polar group-containing olefin copolymer according to any one of Claims 1 to 7, wherein the multi-component, polar group-containing olefin copolymer is a multi-component, polar group-containing olefin copolymer produced by use of a transition metal catalyst which contains a transition metal of Group 10 of the periodic table.

**9.** The multi-component, polar group-containing olefin copolymer according to Claim 8, wherein the transition metal of Group 10 of the periodic table is nickel or palladium.

## Patentansprüche

**1.** Mehrkomponentiges, polare Gruppen enthaltendes Olefincopolymer, umfassend:

mindestens eine Struktureinheit (A), ausgewählt aus der Gruppe, bestehend aus einer von Ethylen abgeleiteten Struktureinheit und einer von einem $\alpha$-Olefin abgeleiteten Struktureinheit, die 3 bis 20 Kohlenstoffatome enthält,
eine Struktureinheit (B), abgeleitet von einem polare Gruppen enthaltenden Olefinmonomer, dargestellt durch die folgende allgemeine Formel (1), und
eine Struktureinheit (C), abgeleitet von einem unpolaren cyclischen Olefin, dargestellt durch die folgende allgemeine Formel (2) ,
wobei ein Phasenwinkel $\delta$, bei dem ein Absolutwert G* eines mit einem Rotationsrheometer gemessenen komplexen Moduls 0,1 MPa (G* = 0,1 MPa) beträgt, von 50 Grad bis 75 Grad beträgt, wie gemäß der in der Beschreibung offenbarten Methode bestimmt, und
wobei die durch $^{13}$C-NMR berechnete Anzahl an Methylverzweigungen 5 oder weniger pro 1.000 Kohlenstoffatomen beträgt,
wobei ein Gehalt der Struktureinheit (C), die von dem unpolaren cyclischen Olefin abgeleitet ist, 0,1 Mol-% bis 20 Mol-% beträgt, und
wobei ein Gehalt der Struktureinheit (B), die von dem polare Gruppen enthaltenden Olefinmonomer abgeleitet ist, 2 Mol-% bis 20 Mol-% beträgt:

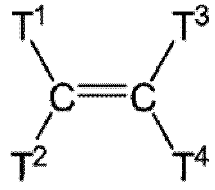

Allgemeine Formel (1)

wobei $T^1$ bis $T^3$ jeweils unabhängig voneinander ein Substituent sind, ausgewählt aus der Gruppe, bestehend aus einem Wasserstoffatom, einer Kohlenwasserstoffgruppe, die 1 bis 20 Kohlenstoffatome enthält, einer Silylgruppe, die ein Kohlenstoffgerüst mit 1 bis 18 Kohlenstoffatomen enthält, einer Alkoxygruppe, die 1 bis 20 Kohlenstoffatome enthält, einem Halogenatom und einer Cyangruppe;
$T^4$ ein Substituent ist, ausgewählt aus der Gruppe, bestehend aus:

einer Estergruppe, die 2 bis 30 Kohlenstoffatome enthält, einer Carboxylgruppe, einer Carbonsäuresalzgruppe,
einer Alkoxycarbonylgruppe, die 2 bis 30 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe,
einer Kohlenwasserstoffgruppe, die 2 bis 20 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe,
einer Alkoxygruppe, die 1 bis 20 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe,
einer Acyloxygruppe, die 2 bis 20 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe,
einer substituierten Aminogruppe, die 1 bis 12 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe, und
einer substituierten Silylgruppe, die 1 bis 18 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe;
wobei die Carbonsäuresalzgruppe eine Carbonsäuresalzgruppe ist, die ein Metallion der Gruppe 1, 2 oder 12 des Periodensystems enthält; und
$T^1$, $T^2$, $T^3$ und $T^4$ gegebenenfalls zu einem Ring gebunden sind,

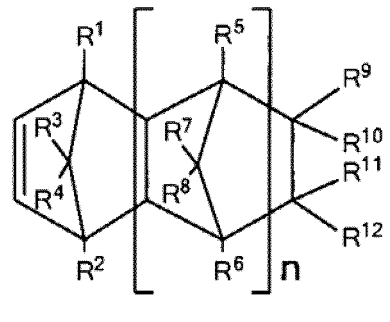

Allgemeine Formel (2)

wobei $R^1$ bis $R^{12}$ gegebenenfalls jeweils gleich oder verschieden sind und jeweils ausgewählt sind aus der Gruppe, bestehend aus einem Wasserstoffatom, einem Halogenatom und einer Kohlenwasserstoffgruppe, die 1 bis 20 Kohlenstoffatome enthält;
$R^9$ und $R^{10}$ gegebenenfalls integriert sind, um eine zweiwertige organische Gruppe zu bilden, und $R^{11}$ und $R^{12}$ gegebenenfalls integriert sind, um eine zweiwertige organische Gruppe zu bilden; $R^9$ oder $R^{10}$ gegebenenfalls einen Ring mit $R^{11}$ oder $R^{12}$ bilden; und

n 0 oder eine positive ganze Zahl ist, und wenn n 2 oder mehr ist, $R^5$ bis $R^8$ in jeder Wiederholungseinheit jeweils wahlweise gleich oder unterschiedlich sind.

**2.** Mehrkomponentiges, polare Gruppen enthaltendes Olefincopolymer nach Anspruch 1, wobei $T^4$ ein Substituent ist, ausgewählt aus der Gruppe, bestehend aus:

einer Estergruppe, die 2 bis 30 Kohlenstoffatome enthält, einer Carboxylgruppe, einer Carbonsäuresalzgruppe, einer Alkoxycarbonylgruppe, die 2 bis 30 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe, und
einer Kohlenwasserstoffgruppe, die 2 bis 20 Kohlenstoffatome enthält und in der ein Teil eines Kohlenstoffgerüsts mit mindestens einem Substituenten substituiert ist, ausgewählt aus der Gruppe, bestehend aus einer Estergruppe, einer Carboxylgruppe und einer Carbonsäuresalzgruppe.

**3.** Mehrkomponentiges, polare Gruppen enthaltendes Olefincopolymer nach Anspruch 1 oder 2, wobei $T^4$ eine Estergruppe mit 2 bis 30 Kohlenstoffatomen, eine Carboxylgruppe oder eine Carbonsäuresalzgruppe ist.

**4.** Mehrkomponentiges, polare Gruppen enthaltendes Olefincopolymer nach einem der Ansprüche 1 bis 3, wobei $T^4$ eine Carboxylgruppe oder eine Carbonsäuresalzgruppe ist.

**5.** Mehrkomponentiges, polare Gruppen enthaltendes Olefincopolymer nach einem der Ansprüche 1 bis 4, wobei $T^1$ und $T^2$ jeweils ein Wasserstoffatom sind und $T^3$ ein Wasserstoffatom oder eine Methylgruppe ist.

**6.** Mehrkomponentiges, polare Gruppen enthaltendes Olefincopolymer nach einem der Ansprüche 1 bis 5, wobei das Gewichtsmittel des Molekulargewichts/das Zahlenmittel des Molekulargewichts (Mw/Mn), gemessen durch Gelpermeationschromatographie, 1,5 oder mehr und 4,0 oder weniger beträgt.

**7.** Mehrkomponentiges, polare Gruppen enthaltendes Olefincopolymer nach einem der Ansprüche 1 bis 6, wobei ein durch Differentialscanningkalorimetrie beobachteter Schmelzpunkt (Tm) (°C) und ein Gesamtgehalt [Z] (Mol-%) der Struktureinheit (B) und der Struktureinheit (C) die folgende Formel (I) erfüllen:

$$\text{Formel (I): } 50 < Tm < -3{,}74 \times [Z] + 130$$

**8.** Mehrkomponentiges, polare Gruppen enthaltendes Olefincopolymer nach einem der Ansprüche 1 bis 7, wobei das mehrkomponentige, polare Gruppen enthaltende Olefincopolymer ein mehrkomponentiges, polare Gruppen enthaltendes Olefincopolymer ist, erzeugt durch Verwendung eines Übergangsmetallkatalysators, der ein Übergangsmetall der Gruppe 10 des Periodensystems enthält.

**9.** Mehrkomponentiges, polare Gruppen enthaltendes Olefincopolymer nach Anspruch 8, wobei das Übergangsmetall der Gruppe 10 des Periodensystems Nickel oder Palladium ist.

## Revendications

**1.** Copolymère d'oléfine à multicomposants, contenant un groupe polaire, comprenant :

au moins une unité structurelle (A) sélectionnée parmi le groupe constitué d'une unité structurelle dérivée d'éthylène et d'une unité structurelle dérivée d'une $\alpha$-oléfine qui contient 3 à 20 atomes de carbone,
une unité structurelle (B) dérivée d'un monomère d'oléfine contenant un groupe polaire représenté par la formule générale suivante (1), et
une unité structurelle (C) dérivée d'une d'oléfine cyclique non polaire représentée par la formule générale suivante (2),
dans lequel un angle de phase $\delta$ auquel une valeur absolue G* d'un module complexe mesuré avec un rhéomètre rotatif est de 0,1 MPa (G* = 0,1 MPa) va de 50 degrés à 75 degrés, tel que déterminé conformément au procédé divulgué dans la description, et
dans lequel un nombre de ramifications méthyle calculé par RMN $^{13}$C est de 5 ou moins pour 1000 atomes de carbone,

dans lequel une teneur en l'unité structurelle (C) dérivée de l'oléfine cyclique non polaire va de 0,1 % en mole à 20 % en mole, et
dans lequel une teneur en l'unité structurelle (B) dérivée du monomère d'oléfine contenant un groupe polaire va de 2 % en mole à 20 % en mole :

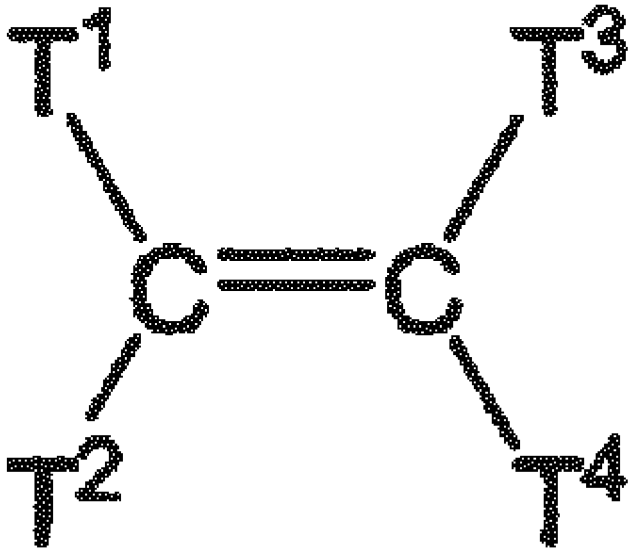

**Formule générale (1)**

où $T^1$ à $T^3$ sont chacun indépendamment un substituant sélectionné parmi le groupe constitué d'un atome d'hydrogène, d'un groupe hydrocarbure qui contient 1 à 20 atomes de carbone, d'un groupe silyle qui contient un squelette de carbone ayant 1 à 18 atomes de carbone, d'un groupe alcoxy qui contient 1 à 20 atomes de carbone, d'un atome d'halogène et d'un groupe cyano ;
$T^4$ est un substituant sélectionné parmi le groupe constitué de :

un groupe ester qui contient 2 à 30 atomes de carbone, un groupe carboxyle, un groupe sel d'acide carboxylique,
un groupe alcoxycarbonyle qui contient 2 à 30 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique,
un groupe hydrocarbure qui contient 2 à 20 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique,
un groupe alcoxy qui contient 1 à 20 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique,
un groupe acyloxy qui contient 2 à 20 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique,
un groupe amino substitué qui contient 1 à 12 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique, et
un groupe silyle substitué qui contient 1 à 18 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique ;
le groupe sel d'acide carboxylique est un groupe sel d'acide carboxylique qui contient un ion métallique du Groupe 1, 2 ou 12 du tableau périodique ; et
$T^1$, $T^2$, $T^3$ et $T^4$ sont en option liés pour former un anneau,

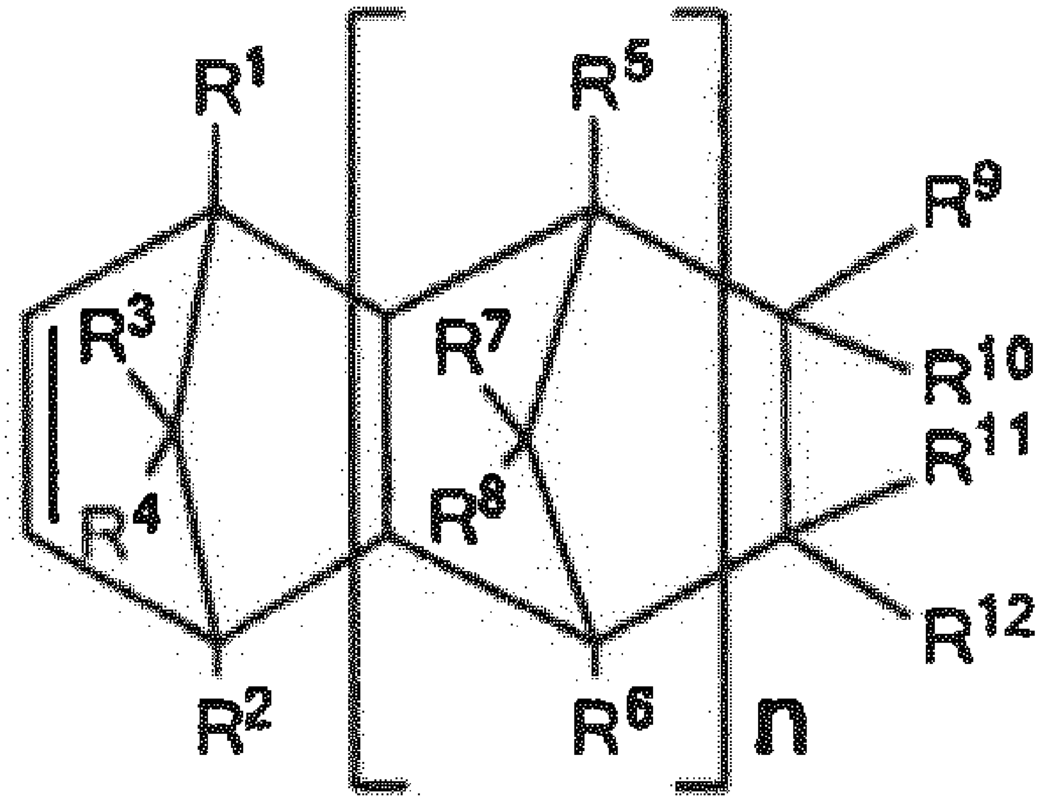

Formule générale (2)

où $R^1$ à $R^{12}$ sont chacun en option identiques ou différents et sont chacun sélectionnés parmi le groupe constitué d'un atome d'hydrogène, d'un atome d'halogène et d'un groupe hydrocarbure qui contient 1 à 20 atomes de carbone ;

$R^9$ et $R^{10}$ sont en option intégrés pour former un groupe organique divalent, et

$R^{11}$ et $R^{12}$ sont en option intégrés pour former un groupe organique divalent ; $R^9$ ou $R^{10}$ forme en option un anneau avec $R^{11}$ et $R^{12}$ ; et

n est 0 ou un entier positif, et lorsque n est 2 ou plus, $R^5$ à $R^8$ sont chacun en option identiques ou différents dans chaque unité de répétition.

**2.** Copolymère d'oléfine à multicomposants, contenant un groupe polaire, selon la revendication 1, dans lequel $T^4$ est un substituant sélectionné parmi le groupe constitué de :

un groupe ester qui contient 2 à 30 atomes de carbone, un groupe carboxyle, un groupe sel d'acide carboxylique, un groupe alcoxycarbonyle qui contient 2 à 30 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique, et

un groupe hydrocarbure qui contient 2 à 20 atomes de carbone et dans lequel une partie d'un squelette de carbone est substituée par au moins un substituant sélectionné parmi le groupe constitué d'un groupe ester, d'un groupe carboxyle et d'un groupe sel d'acide carboxylique.

**3.** Copolymère d'oléfine à multicomposants, contenant un groupe polaire, selon la revendication 1 ou 2, dans lequel $T^4$ est un groupe ester qui contient 2 à 30 atomes de carbone, un groupe carboxyle ou un groupe sel d'acide carboxylique.

**4.** Copolymère d'oléfine à multicomposants, contenant un groupe polaire, selon l'une quelconque des revendications 1 à 3, dans lequel $T^4$ est un groupe carboxyle ou un groupe sel d'acide carboxylique.

**5.** Copolymère d'oléfine à multicomposants, contenant un groupe polaire, selon l'une quelconque des revendications 1 à 4, dans lequel $T^1$ et $T^2$ sont chacun un atome d'hydrogène, et $I^3$ est un atome d'hydrogène ou un groupe méthyle.

**6.** Copolymère d'oléfine à multicomposants, contenant un groupe polaire, selon l'une quelconque des revendications 1 à 5, dans lequel un poids moléculaire moyen en poids / un poids moléculaire moyen en nombre (Mw/Mn) mesurés par chromatographie d'exclusion diffusion est de 1,5 ou plus et 4,0 ou moins.

**7.** Copolymère d'oléfine à multicomposants, contenant un groupe polaire, selon l'une quelconque des revendications 1 à 6, dans lequel un point de fusion (Tm) (°C) observé par analyse calorimétrique différentielle et une teneur totale [Z] (% en mole) de l'unité structurelle (B) et l'unité structurelle (C) satisfont la formule suivante (I) :

$$\text{Formule (I)} : 50 < Tm < -3{,}74 \times [Z] + 130$$

**8.** Copolymère d'oléfine à multicomposants, contenant un groupe polaire, selon l'une quelconque des revendications 1 à 7, dans lequel le copolymère d'oléfine à multicomposants, contenant un groupe polaire, est un copolymère d'oléfine à multicomposants, contenant un groupe polaire, produit par l'utilisation d'un catalyseur à métal de transition qui contient un métal de transition du Groupe 10 du tableau périodique.

**9.** Copolymère d'oléfine à multicomposants, contenant un groupe polaire, selon la revendication 8, dans lequel le métal de transition du Groupe 10 du tableau périodique est le nickel ou palladium.

FIG. 1

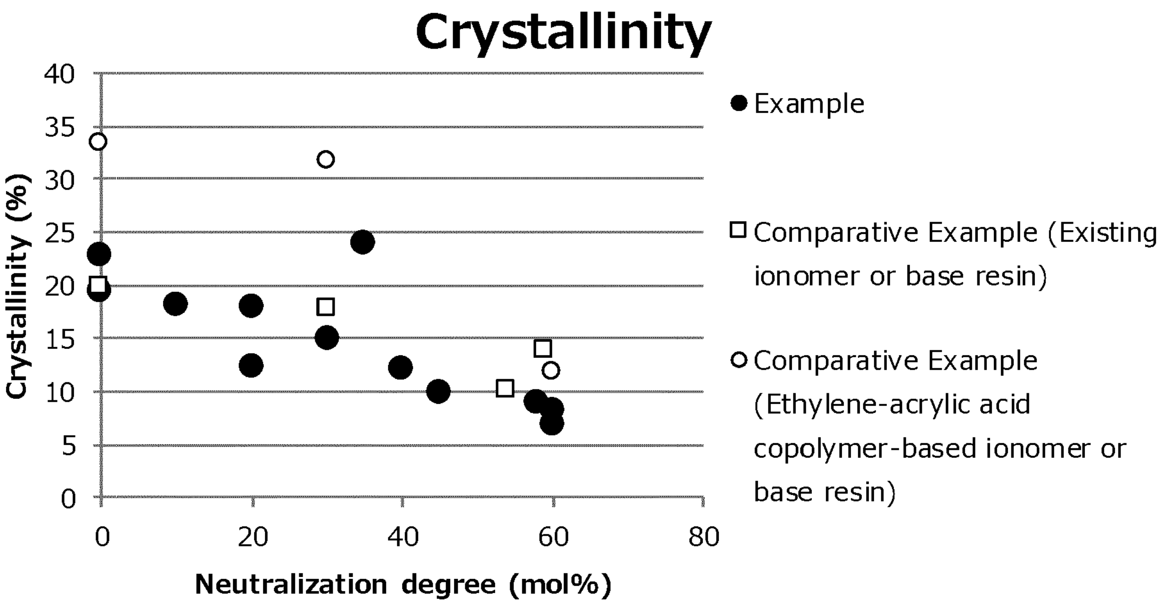
Crystallinity
Crystallinity (%)
40
35
30
25
20
15
10
5
0
0
20
40
60
80
Neutralization degree (mol%)
Example
Comparative Example (Existing ionomer or base resin)
Comparative Example (Ethylene-acrylic acid copolymer-based ionomer or base resin)

FIG. 2

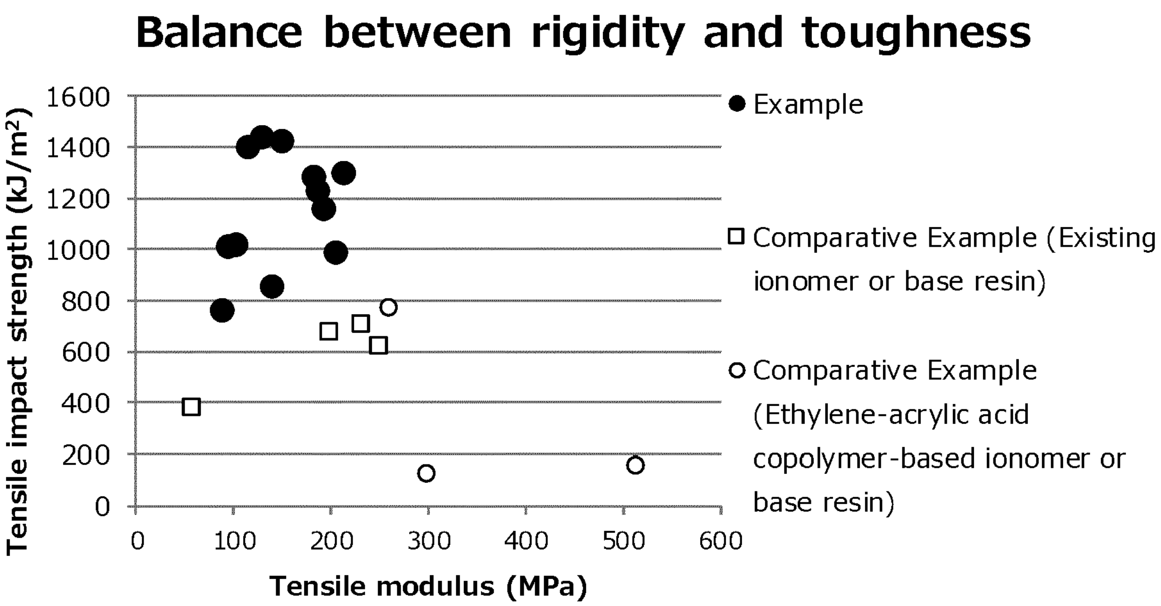
Balance between rigidity and toughness
Tensile impact strength (kJ/m²)
1600
1400
1200
1000
800
600
400
200
0
0
100
200
300
400
500
600
Tensile modulus (MPa)
Example
Comparative Example (Existing ionomer or base resin)
Comparative Example (Ethylene-acrylic acid copolymer-based ionomer or base resin)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3264272 A
- JP 2016079408 A
- WO 2009123138 A
- JP 2015028164 A
- EP 3208285 A
- JP 2010150532 A
- WO 2010050256 A
- JP 2010202647 A
- JP 2010260913 A
- JP 2013043871 A


### Non-patent literature cited in the description


- **BROOKHART et al.** *Chem. Rev.,* 2000, vol. 100, 1169
- **SADAO MORI.** Size Exclusion Chromatography. Kyoritsu Shuppan, 51-60